# EUROPÄISCHE PATENTSCHRIFT

(11) **EP 4 573 131 B1**
(45) Veröffentlichungstag und Bekanntmachung des Hinweises auf die Patenterteilung: **08.07.2026**
(21) Anmeldenummer: 23757269.8
(22) Anmeldetag: 16.08.2023
(51) Int. Cl.: C08C 1/00, C08F 2/01, C08J 11/04, C08J 11/06

(54) **VERFAHREN ZUR HERSTELLUNG VON THERMOPLASTISCHEN FORMMASSEN**
PROCESS FOR THE PRODUCTION OF THERMOPLASTIC MOULDING COMPOUNDS
PROCÉDÉ DE FABRICATION DE MASSES DE MOULAGE THERMOPLASTIQUES

(30) Priorität: 18.08.2022 EP 22190939
(43) Veröffentlichungstag der Anmeldung: 25.06.2025
(73) Patentinhaber: INEOS Styrolution Group GmbH, 60325 Frankfurt (DE)
(72) Erfinder: FISCHER, Wolfgang, 69124 Heidelberg (DE); TAELMAN, Koen, 2930 Brasschaat (BE)
(74) Vertreter: Jacobi, Markus Alexander
(86) Internationale Anmeldenummer: PCT/EP2023/072544
(87) Internationale Veröffentlichungsnummer: WO 2024/038080

(56) Entgegenhaltungen:
- WO-A1-2012/037244
- WO-A1-2015/000873
- WO-A1-99/16600
- US-A- 4 302 377
- US-A- 5 698 666

## Beschreibung

Die Erfindung betrifft ein Verfahren zur Herstellung von thermoplastischen Formmassen, umfassend:
(a) Zufuhr einer einen Kautschuk enthaltenden Dispersion sowie einer Fällungslösung in einen Fällbehälter, wobei eine wässrige, Kautschukpartikel enthaltende Suspension erzeugt wird,
(b) gegebenenfalls Sintern der in der wässrigen, Kautschukpartikel enthaltenden Suspension enthaltenen Kautschukpartikel zu größeren Partikeln;
(c) mechanisches Entwässern der wässrigen, Kautschukpartikel enthaltenden Suspension, wobei Restfeuchte enthaltende Kautschukpartikel und eine, feinteiligen Kautschuk enthaltende Flüssigphase erhalten werden,
(d) Zufuhr der Restfeuchte enthaltenden Kautschukpartikel in einen Extruder, wobei der Extruder eine Einzugszone, in die die Restfeuchte enthaltenden Kautschukpartikel zugeführt werden, einen Entwässerungsabschnitt, in dem eine Rest-Kautschuk enthaltende Flüssigphase aus den Restfeuchte enthaltenden Kautschukpartikeln entfernt wird, mindestens einen Zuführabschnitt für mindestens ein weiteres Polymer und/oder Additive, einen Mischabschnitt, in dem die Kautschukpartikel, das mindestens eine weitere Polymer und die Additive zu einer Schmelze der thermoplastischen Formmasse vermischt werden, sowie eine Austragszone, durch die ein Schmelze-Strang aus dem Extruder ausgepresst wird, umfasst.

Thermoplastische Formmassen, die mit dem Verfahren hergestellt werden können, sind insbesondere mindestens eine Kautschuk-Komponente enthaltende Formmassen, wie insbesondere Acrylnitril-Styrol-Acrylat-Copolymere (ASA) oder Acrylnitril-Butadien-Styrol-Copolymer (ABS) Formmassen. Die Herstellung entsprechender thermoplastischer Formmassen wird zum Beispiel in der EP-A 0 734825, WO-A 2020/043690, WO-A 2015/000873 oder WO-A 2015/004112 beschrieben.

Zur Herstellung werden im Allgemeinen zunächst partikelförmige Kautschuke, insbesondere Butylacrylat-basierte Pfropfkautschuke oder Butadien-basierte Pfropfkautschuke, durch eine Emulsionspolymerisation in einem wässrigen System hergestellt und anschließend mit Hilfe einer Fällungslösung ausgefällt.

Die so erhaltenen Partikel werden anschließend üblicherweise entwässert, beispielsweise durch Fitration, Sieben, Dekantieren, Auspressen des Wassers oder Zentrifugation, gegebenenfalls während der Entwässerung oder anschließend mit Wasser gewaschen und gegebenenfalls anschließend durch thermische Trocknung von weiterem Wasser befreit. Anschließend werden die partikelförmigen Kautschuke einem Extruder zugeführt und weiter entwässert und im Extruder anschließend mit weiteren Komponenten vermischt und zu der thermoplastischen Formmasse verarbeitet.

Nachteil aller bekannten Verfahren ist, dass sowohl bei der Entwässerung der wässrigen Kautschukpartikel enthaltenden Suspension als auch bei der Entwässerung der Kautschukpartikel im Extruder jeweils eine Flüssigphase anfällt, die noch bis zu 15 Gew.-% Kautschuk bezogen auf die Summe aus Wasser und Kautschuk enthält, der in der Regel mit dem abgetrennten Wasser einer Entsorgung zugeführt wird. Aus WO 2015/000873 ist zwar allgemein bekannt, dass das abgetrennte Wasser in den Prozess zurückgeführt werden kann, jedoch kann die direkte Rückführung dazu führen, dass Kautschuk aus der abgetrennten Flüssigphase zu Ablagerungen oder Verstopfungen in anschließenden Anlagenteilen führen kann. Zudem können aufgrund des hohen Kautschukgehalts in dem bei der Entwässerung im Extruder anfallenden Wasser bereits Ablagerungen oder Verstopfungen am Ablauf aus dem Extruder auftreten.

Eine Aufgabe der vorliegenden Erfindung ist es daher, ein Verfahren zur Herstellung von thermoplastischen Formmassen bereitzustellen, das eine bessere Ausbeute liefert und bei dem die Menge des mit dem Wasser aus dem Prozess entfernten Produkts und Fäll-Salzes minimiert werden kann und gleichzeitig die Gefahr von Verstopfungen in Rohrleitungen minimiert wird.

Diese Aufgabe wird gelöst durch ein Verfahren zur Herstellung von thermoplastischen Formmassen, umfassend:
(a) Zufuhr einer einen Kautschuk enthaltenden Dispersion sowie einer Fällungslösung in einen Fäll-Behälter, wobei eine wässrige, Kautschukpartikel enthaltende Suspension erzeugt wird,
(b) gegebenenfalls Sintern der in der wässrigen, Kautschukpartikel enthaltenden Suspension enthaltenen Kautschukpartikel zu größeren Partikeln;
(c) mechanisches Entwässern der wässrigen, Kautschukpartikel enthaltenden Suspension, wobei Restfeuchte enthaltende Kautschukpartikel und eine, feinteiligen Kautschuk enthaltende Flüssigphase erhalten werden,
(d) Zufuhr der Restfeuchte enthaltenden Kautschukpartikel in einen Extruder, wobei der Extruder eine Einzugszone, in die die Restfeuchte enthaltenden Kautschukpartikel zugeführt werden, einen Entwässerungsabschnitt, in dem eine Rest-Kautschuk enthaltende Flüssigphase aus den Restfeuchte enthaltenden Kautschukpartikeln entfernt wird, mindestens einen Zuführabschnitt für mindestens ein weiteres Polymer und/oder Additive, einen Mischabschnitt, in dem die Kautschukpartikel, das mindestens eine weitere Polymer und die Additive zu einer Schmelze der thermoplastischen Formmasse vermischt werden, sowie eine Austragszone, durch die ein Schmelze-Strang aus dem Extruder ausgepresst wird, umfasst,
wobei die im Entwässerungsabschnitt abgetrennte Rest-Kautschuk enthaltende Flüssigphase in einem Pufferbehälter gesammelt wird, wobei der Pufferbehälter mindestens einen Rührer umfasst, mit dem die Rest-Kautschuk enthaltende Flüssigphase gerührt wird, um ein Akkumulieren der in der Flüssigkeit noch enthaltenen Kautschukpartikel zu verhindern, und Zurückführen der im Pufferbehälter gesammelten Rest-Kautschuk enthaltenden Flüssigphase in den Fäll-Behälter.

Überraschenderweise hat sich gezeigt, dass das Rühren der den Rest-Kautschuk enthaltenden Flüssigphase im Pufferbehälter ausreichend ist, um auch ein Verstopfen von Rohrleitungen, durch die die Rest-Kautschuk enthaltende Flüssigphase geleitet wird, zu reduzieren oder sogar zu verhindern.

Weiterhin hat sich auch gezeigt, dass die aufgrund der Durchführung der Fällung und der Sinterung bei üblicherweise erhöhten Temperaturen mehrfache thermische Belastung der Kautschukpartikel, die mit der Rest-Kautschuk enthaltenden Flüssigphase in den Fällbehälter zurückgeführt werden, nicht zu einer negativen Beeinflussung der mechanischen Eigenschaften der mit dem Verfahren hergestellten thermoplastischen Formmasse führt. Somit kann durch die Rückführung die Ausbeute an Kautschuk bei gleichbleibender Produktqualität erhöht werden und gleichzeitig kann die aus dem Prozess mit dem Abwasser entfernte Menge an Kautschuk minimiert werden. Ebenso wird die Menge an Abwasser und damit auch die Menge an benötigtem Fäll-Salz minimiert, während die Fällung und/oder die Sinterung gleichzeitig mit erniedrigtem Feststoffgehalt betrieben werden kann, wodurch die Gefahr der Verstopfung in diesem Verfahrensschritt reduziert wird.

Die im Entwässerungsabschnitt des Extruders erhaltene Rest-Kautschuk enthaltende Flüssigphase enthält in der Regel mehr als 1 Gew.-% Kautschuk, mehr bevorzugt 3 bis 20 Gew.-% Kautschuk und insbesondere 5 bis 15 Gew.-% Kautschuk.

Aufgrund des Anteils an Kautschuk in der Rest-Kautschuk enthaltenden Flüssigphase besteht das Risiko, dass sich Ablagerungen und/oder Verstopfungen in der Leitung zwischen dem Entwässerungsabschnitt des Extruders und dem Pufferbehälter bilden können. Zur Verhinderung dieser Ablagerungen und/oder Verstopfungen ist es bevorzugt, wenn die Rest-Kautschuk enthaltende Flüssigphase nach Entfernen aus dem Extruder mit Wasser vermischt wird. Die Menge an Wasser, mit der die den Rest-Kautschuk enthaltende Flüssigphase gemischt wird, wird vorzugsweise so eingestellt, dass die den Rest-Kautschuk enthaltende Flüssigphase nach Zugabe des Wassers an einen Anteil an maximal 15 Gew.-% Kautschuk, mehr bevorzugt einen Anteil an Kautschuk im Bereich von 2 bis 12 Gew.-% und insbesondere einen Anteil an Kautschuk im Bereich von 4 bis 10 Gew.-% aufweist.

Um die Ausbeute weiter zu erhöhen und die Menge an Kautschuk, die mit dem Abwasser aus dem Prozess entfernt wird, zu minimieren, ist es weiterhin bevorzugt, wenn die, feinteiligen Kautschuk enthaltende Flüssigphase in den Fäll-Behälter zurückgeführt wird.

Da der Kautschuk in der den feinteiligen Kautschuk enthaltenden Flüssigphase, die bei der mechanischen Entwässerung in Schritt (c) erhalten wird, und in der den Rest-Kautschuk enthaltenden Flüssigphase, die im Entwässerungsabschnitt des Extruders in Schritt (d) anfällt, der gleiche ist, ist es weiterhin bevorzugt, wenn die den feinteiligen Kautschuk enthaltende Flüssigphase vor dem Zurückführen in den Fällbehälter in den Pufferbehälter eingeleitet und mit der im Entwässerungsabschnitt entfernten Rest-Kautschuk enthaltenden Flüssigphase gemischt wird. Auf diese Weise wird nur eine Rückführleitung in den Fällbehälter benötigt und es kann abhängig von den Produktionsbedingungen gezielt aus dem Pufferbehälter Kautschuk enthaltende Flüssigkeit in den Fällbehälter zurückgeführt werden. Es ist nicht notwendig, die den feinteiligen Kautschuk enthaltende Flüssigphase und die den Rest-Kautschuk enthaltende Flüssigphase beim Einleiten in den Fällbehälter aufeinander abzustimmen.

Der in dem erfindungsgemäßen Verfahren eingesetzte Kautschuk kann ein gepfropfter Kautschuk sein. Bevorzugt ist ein Kautschuk, der eine oder mehrere aufgepfropfte Hüllen aus anderen, in der Regel nicht-elastomeren Polymeren aufweist. Hierzu werden die ein- oder mehrstufigen elastomeren Grundstufen durch Polymerisation eines oder mehrerer der Monomeren Butadien, Isopren, Chloropren, Styrol, Alkylstyrol, C₁- bis C₁₀-Alkylester der Acrylsäure oder der Methacrylsäure sowie geringer Mengen anderer, auch vernetzender Monomeren, erhalten, bei denen die harten Pfropfstufen aus einem oder mehreren der Monomeren: Styrol, Alkylstyrol, Acrylnitril, Methylmethacrylat polymerisiert werden. Es ist auch möglich, die Grundstufe mit Hilfe einer Saat herzustellen, die auf Basis der Monomeren Butadien, Isopren, Chloropren, Styrol, Alkylstyrol, C₁- bis C₄₀-Alkylester der Acrylsäure oder der Methacrylsäure sowie geringer Mengen anderer, auch vernetzender Monomeren erhalten wird.

Bevorzugt sind Kautschuke auf Basis von: Butadien/Styrol/Acrylnitril, n-Butylacrylat/Styrol/Acrylnitril, Butadien/n-Butylacrylat/Styrol/Acrylnitril, n-Butylacrylat/Styrol/Methylmethacrylat, Butadien/Styrol/Acrylnitril/Methylmethacrylat und Butadien/n-Butylacrylat/Methylmethacrylat/Styrol/Acrylnitril. In Saat und/oder Kern und/oder Schale können bis zu 10 Gew.-% funktionelle Gruppen tragende, polare Monomere oder auch vernetzend wirkende Monomere ein-polymerisiert sein.

Beispiele für die in dem erfindungsgemäßen Verfahren eingesetzten Kautschuke sind Polymere von konjugierten Dienen wie Butadien, mit einer äußeren Pfropfhülle, insbesondere auf Basis einer vinylaromatischen Verbindung, wie beispielsweise SAN-Copolymeren. Auch können die Kautschuke Pfropfkautschuke auf Basis von vernetzen Polymerisaten aus C₁- bis C₁₀-Alkylestern der Acrylsäure wie n-Butylacrylat, Ethylhexylacrylat, gepfropft mit Polymeren auf der Grundlage vinylaromatischer Verbindungen wie SAN-Copolymeren sein. Weiterhin eignet sich das Verfahren auch für Pfropfkautschuke, die im Wesentlichen ein Copolymer aus konjugierten Dienen und C₁- bis C₁₂-Alkylacrylaten, beispielsweise ein Butadien-n-Butylacrylat-Copolymer und eine oder mehrere Pfropfstufen aus SAN-Copolymer, Polystyrol oder PMMA enthalten. Butadien-Pfropfkautschuke und Butylacrylat-Pfropfkautschuke sind dabei besonders bevorzugt.

Der Kautschuk wird üblicherweise in einem wässrigen System hergestellt, beispielsweise durch Emulsionspolymerisation wie beispielsweise in der WO-A 2020/043690 beschrieben. In der Emulsionspolymerisation entsteht eine wässrige Dispersion mit Wasser als kontinuierlicher Phase und bei der Polymerisation erzeugten Kautschukpartikeln als disperser Phase.

Zur Aufbereitung wird die Dispersion in einen Fällbehälter eingeleitet. Zur Förderung der Dispersion aus der Emulsionspolymerisation wird vorzugsweise eine Schlauchpumpe eingesetzt, wenn der Dispersionslagertank kein ausreichendes Gefälle für eine pumpenfreie Dosierung über Schwerkraft ermöglicht.

Die Dispersion, die dem Fällbehälter zugeführt wird, hat vorzugsweise einen Feststoffgehalt im Bereich von 10 bis 50 Gew.-%, weiter bevorzugt von 20 bis 45 Gew.-% und besonders bevorzugt von 30 bis 40 Gew.-%. Der in der Dispersion enthaltene Feststoff ist dabei der partikelförmig vorliegende Kautschuk.

Im Fällbehälter wird die Dispersion durch Zugabe einer Fällsalz-Lösung, die vorzugsweise mindestens ein Salz und/oder eine Säure enthält, in eine wässrige, Kautschukpartikel enthaltende Suspension überführt.

Als Dispersion wird im Rahmen der vorliegenden Erfindung eine Mischung aus Partikeln mit einem volumenmittleren durchschnittlichen Teilchendurchmesser Dv von 20 bis 999 nm, bevorzugt im Bereich von 50 bis 800 nm, in einer flüssigen Phase verstanden. Der volumenmittlere durchschnittliche Teilchendurchmesser Dv (oder der mittlere Teilchendurchmesser nach De Broucker) ist eine durchschnittliche Größe bezogen auf das Einheitsvolumen der Partikel. Der volumenmittlere durchschnittliche Teilchendurchmesser der Partikel in der Dispersion kann beispielsweise mittels Lichtstreuung (Laserbeugung) bestimmt werden, zum Beispiel mit einem Gerät von Beckman Coulter.

Als Suspension wird eine Mischung aus Partikeln in einer flüssigen Phase verstanden, deren Partikel größer sind als die Partikel der Dispersion. Zur Bestimmung der Teilchengröße der Suspension können abhängig von der Art der Bestimmung der Partikelgröße und der Größenverteilung zum Beispiel der D10-Wert, der D50-Wert oder der D90-Wert herangezogen werden, wobei der D10 Wert die Partikelgröße angibt, bis zu der 10 Gew..-% kleiner sind, der D50-Wert entsprechend die Partikelgröße, bis zu der 50 Gew.-% der Partikel kleiner sind und der D90-Wert die Partikelgröße, bis zu der 90 Gew.-% der Partkel kleiner sind. Üblicherweise weisen die Partikel in der Suspension einen D10-Wert im Bereich von 50 bis 400 µm, einen D50-Wert im Bereich von 200 bis 2000 µm und/oder einen D90-Wert im Bereich von 500 bis 4000 µm auf. Besonders bevorzugt weisen die Partikel in der Suspension einen D10-Wert von 50 bis 400 µm, einen D50-Wert von 200 bis 2000 µm und einen D90-Wert von 500 bis 4000 µm auf. Die Partikelgröße der Partikel der Suspension wird dabei vorzugsweise durch Nasssiebung bestimmt, bei der Siebtürme mit Sieben mit verschiedenen Maschenweiten verwendet werden. Nach der Siebung wird die Masse der Partikel auf den einzelnen Sieben bestimmt und hieraus der D10-Wert, der D50-Wert und der D90-Wert.

Vorzugsweise enthält die Fällungslösung ein zweiwertiges Salz oder ein dreiwertiges Salz und insbesondere enthält die Fällungslösung mindestens ein Erdalkalimetallsalz, vorzugsweise ein Magnesiumsalz und/oder Calciumsalz, besonders bevorzugt mindestens ein Magnesiumsalz.

Insbesondere ist das mindestens eine Erdalkali-Metallsalz ausgewählt aus Erdalkalimetallhalogeniden, wie Chloriden, Erdalkalimetallsulfaten, Erdalkalimetallphosphaten, wie Orthophosphaten oder Pyrophosphaten, Erdalkalimetall-acetaten und Erdalkalimetallformiaten. Vorzugsweise wird das mindestens eine Erdalkali-metallsalz aus Chloriden und Sulfaten ausgewählt.

Bevorzugte Erdalkalimetallsalze sind Magnesiumsulfat (wie Kieserit (Mg[SO₄] • H₂O), Pentahydrit (Mg[SO₄] • 5H₂O), Hexahydrit (Mg[SO₄] • 6H₂O) und Bittersalz (Mg[SO₄] • 7H₂O)), Magnesiumchlorid, Calciumchlorid, Calciumformiat, Magnesiumformiat oder Mischungen davon. Besonders bevorzugt ist die Verwendung von Magnesiumsulfat. Wenn die Fällungslösung ein dreiwertiges Salz enthält, sind wasserfreies Aluminiumsulfat oder Aluminiumsulfat mit Kristallwasser besonders bevorzugt.

Die Menge an Salz, die zugegeben wird, ist abhängig von der Menge an in der Dispersion enthaltenem Wasser und liegt vorzugsweise in einem Bereich von 0,1 bis 3 Gew.-%, bevorzugt in einem Bereich von 0,5 bis 3 Gew.-% und insbesondere in einem Bereich von 0,5 bis 2 Gew.-% Salz, jeweils bezogen auf die Menge an Wasser in der Dispersion.

Der pH-Wert der Mischung aus Dispersion und Fällungslösung, die in Schritt (a) erhalten wird, liegt vorzugsweise im Bereich von 3 bis 10. Hierbei ist möglich, die Fällung im sauren Bereich oder im basischen Bereich durchzuführen, wobei bei einer Fällung im sauren Bereich der pH-Wert der Mischung vorzugsweise im Bereich von 3 bis 7, insbesondere im Bereich von 4 bis 6 liegt und bei einer Fällung im basischen Bereich bevorzugt im Bereich von 7 bis 9, und insbesondere im Bereich von 8 bis 9.

Der pH-Wert kann beispielsweise durch die Zugabe von Puffersalzen, Säuren und/oder Basen eingestellt werden, wobei beispielsweise Schwefelsäure, Phosphorsäure, Lösungen von Natriumhydroxid, Kaliumhydroxid, Natriumsalzen und Kaliumsalzen von Carbonaten (z.B. Natriumcarbonat Na₂CO₃ und/oder Natriumhydrogencarbonat NaHCO₃ oder Mischungen davon), Sulfaten oder Phosphaten (z.B. Tetranatriumpyrophosphat) verwendet werden können. Vorzugsweise wird beispielsweise mindestens ein Puffersalz aus der Gruppe der Natriumsalze, insbesondere aus der Gruppe der Natriumcarbonate, Natriumsulfate und Natriumphosphate, vorzugsweise aus der Gruppe der Natriumcarbonate Na₂CO₃ und Natriumhydrogencarbonate NaHCO₃, zugesetzt.

Die Puffersalze, Säuren und/oder Basen können bereits während der Herstellung des Kautschuks in der Emulsionspolymerisation zugegeben werden oder im Fällbehälter in Schritt (a) zugemischt werden. Vorzugsweise erfolgt die Zugabe von Puffersalzen oder Basen während der Herstellung des Kautschuks in der Emulsionspolymerisation. Die Zugabe von Säuren erfolgt im Fällbehälter oder unmittelbar vor der Einleitung in den Fällbehälter.

Um den Kautschuk aus der Dispersion auszufällen und die wässrige, Kautschukpartikel enthaltende Suspension zu erhalten, werden die Fällungslösung und die Dispersion üblicherweise über einen Zeitraum im Bereich von 5 bis 50 Minuten, vorzugsweise 5 bis 40 Minuten, gemischt.

Die Fällung in Schritt (a) kann in einem Temperaturbereich von 20 bis 150°C, vorzugsweise von 40 bis 100°C, besonders bevorzugt von 45 bis 99°C, ebenfalls bevorzugt von 60 bis 95°C, durchgeführt werden. Vorzugsweise wird die Dispersion mit der mindestens einen Fällungslösung bei einer Temperatur im Bereich von 30 bis 95°C, vorzugsweise 40 bis 95 °C, besonders bevorzugt 40 bis 90°C, vermischt.

Um größere Partikel zu erhalten, können die in der in Schritt (a) erhaltenen wässrigen, Kautschukpartikel enthaltenden Suspension enthaltenen Kautschukpartikel in einem nachfolgenden Sinterschritt (b) zu größeren Partikeln agglomeriert werden. Hierzu wird die in Schritt (a) erhaltene wässrige, Kautschukpartikel enthaltende Suspension vorzugsweise in einen Sinterbehälter gefördert, in dem die wässrige, Kautschukpartikel enthaltende Suspension auf einer Temperatur im Bereich von 70 bis 150°C, vorzugsweise im Bereich von 75 bis 140°C und besonders bevorzugt im Bereich von 85 bis 140°C gehalten wird. Insbesondere wird die wässrige, Kautschukpartikel enthaltende Suspension für einen Zeitraum von 10 bis 90 Minuten, vorzugsweise 15 bis 90 Minuten, besonders bevorzugt 15 bis 80 Minuten, auf dieser Temperatur gehalten.

Besonders bevorzugt erfolgt die Mischung der Dispersion und der Fällungslösung in Schritt (a) bei einer Temperatur im Bereich von 30 bis 95°C und vorzugsweise im Bereich von 40 bis 90°C, und, wenn Schritt (b) durchgeführt wird, das Sintern in Schritt (b) für mindestens 5 Minuten bei einer Temperatur im Bereich von 70 bis 150°C, vorzugsweise 80 bis 140°C.

Das Ausfällen der Kautschukpartikel in Schritt (a) und das Sintern in Schritt (b) kann in unterschiedlichen Behältern durchgeführt werden oder im gleichen Behälter, wobei Ausfällen und Sintern im gleichen Behälter insbesondere dann möglich ist, wenn das Verfahren batchweise betrieben wird, da in diesem Fall zunächst bei niedrigerer Temperatur die Dispersion mit der Fällungslösung gemischt wird und anschließend bei höherer Temperatur die Kautschukpartikel gesintert werden. Bevorzugt ist es daher, wenn für Schritt (a) ein Fällbehälter und für Schritt (b) ein Sinterbehälter verwendet werden, wobei der Sinterbehälter und der Fällbehälter zwei unterschiedliche Behälter sind. Zum Transport der wässrigen, Kautschukpartikel enthaltenden Suspension sind der Sinterbehälter und der Fällbehälter mit einer Verbindungsleitung verbunden, in der eine Pumpe aufgenommen ist.

Um beim Sintern eine möglichst gleichmäßige Größenverteilung der entstehenden agglomerierten Partikel zu erhalten, ist es vorteilhaft, wenn sowohl das Fällen der Kautschukpartikel im Fällbehälter als auch das Sintern kontinuierlich durchgeführt werden. Um die die Kautschukpartikel enthaltende Suspension in Bewegung zu halten und ein Sedimentieren der Kautschukpartikel zu verhindern, insbesondere auch dann, wenn die Zufuhr der Suspension in einen nachfolgenden Anlagenteil beispielsweise aufgrund einer Störung nicht möglich ist, ist in der Verbindungsleitung zwischen dem Fällbehälter und dem Sinterbehälter ein Umpumpkreis vorgesehen, in dem die wässrige, Kautschukpartikel enthaltende Suspension in einer Ringleitung umgepumpt wird.

Für einen kontinuierlichen Betrieb ist es dabei weiterhin vorteilhaft, den Sinterbehälter größer als den Fällbehälter auszuführen, wenn die notwendige Verweilzeit im Sinterbehälter größer ist als die Verweilzeit im Fällbehälter.

Nach dem Fällen, oder, wenn Schritt (b) durchgeführt wird, nach dem Sintern wird die wässrige, Kautschukpartikel enthaltende Suspension entwässert, wobei Restfeuchte enthaltende Kautschukpartikel und eine, feinteiligen Kautschuk enthaltende Flüssigphase erhalten werden.

Der Wassergehalt der Restfeuchte enthaltenden Kautschukpartikel beträgt vorzugsweise maximal 60 Gew.-%, mehr bevorzugt maximal 50 Gew.-% und insbesondere maximal 40 Gew.-%, jeweils bezogen auf die Gesamtmasse der Restfeuchte enthaltenden Kautschukpartikel. Der Wassergehalt kann insbesondere mit Hilfe geeigneter Analysegeräte, zum Beispiel Trocknungs- und Wiegevorrichtungen, bestimmt werden, wobei eine Probe so lange getrocknet wird, bis ein konstantes Gewicht der Probe über einen bestimmten Zeitraum erreicht worden ist. Beispielsweise kann der Wassergehalt der Restfeuchte enthaltenden Kautschukpartikel in einem Halogen Moisture Analyzer HR73 von Mettler Toledo bei 180°C bis zum Erreichen der Gewichtskonstanz für 30 Sekunden bestimmt werden.

Insbesondere liegt der Wassergehalt der in Schritt (c) erhaltenen Restfeuchte enthaltenden Kautschukpartikel im Bereich von 10 bis 50 Gew.-%, vorzugsweise im Bereich von 20 bis 45 Gew.-% und insbesondere im Bereich von 20 bis 40Gew.-%, jeweils bezogen auf die Gesamtmasse der Restfeuchte enthaltenden Kautschukpartikel.

Die mechanische Entwässerung erfolgt üblicherweise durch kontinuierliche oder batchweise Zentrifugation und/oder Filtration. Vorzugsweise wird die mechanische Entwässerung durch kontinuierliches Zentrifugieren erreicht. Die wässrige, Kautschukpartikel enthaltende Suspension wird hierzu zum Beispiel mit einer Zentripetalbeschleunigung von 200·g bis 2000·g, mit der Erdbeschleunigung g = 9,81 m/s², vorzugsweise mit einer Zentripetalbeschleunigung von 500·g bis 1300·g, über einen Zeitraum von 1 Sekunde bis 5 Minuten, vorzugsweise von 1 bis 120 Sekunden, zentrifugiert.

Um insbesondere bei Ausfall einer kontinuierlich arbeitenden mechanischen Entwässerung eine Sedimentation der Kautschukpartikel zu verhindern ist es auch hier vorteilhaft, wenn in der Verbindung zwischen Sinterbehälter und kontinuierlich arbeitender mechanischer Entwässerung, insbesondere mindestens einer Zentrifuge oder mindestens einem Filterapparat, ein Umpumpkreis vorgesehen ist, in dem die die gesinterten Kautschukpartikel enthaltende Suspension in einer Ringleitung umgepumpt wird, bevor diese der Zentrifuge und/oder dem Filterapparat zugeführt wird.

Wenn eine Batchzentrifuge verwendet wird, die diskontinuierlich entleert wird, ist ein Pufferbehälter, der mit einem Rührer ausgestattet ist, erforderlich, in dem die die Kautschukpartikel enthaltende Suspension gesammelt wird.

Die Restfeuchte enthaltenden Kautschukpartikel können dann, wie beispielsweise in der WO-A 2020/043690 beschrieben, mit Wasser und/oder einer Mischung aus Wasser und einem polaren, mit Wasser mischbaren Lösungsmittel gewaschen und anschließend getrocknet werden.

Da die in Schritt (c) bei der mechanischen Entwässerung der wässrigen, Kautschukpartikel enthaltenden Suspension von den Restfeuchte enthaltenden Kautschukpartikeln abgetrennte Flüssigphase noch feinteiligen Kautschuk enthält, wird die den feinteiligen Kautschuk enthaltende Flüssigphase vorzugsweise in den Fällbehälter zurückgeführt.

Die Restfeuchte enthaltenden Kautschukpartikel werden dann zur Herstellung der thermoplastischen Formmasse in einen Extruder eingebracht, wobei der Extruder eine Einzugszone, in die die Restfeuchte enthaltenden Kautschukpartikel zugeführt werden, einen Entwässerungsabschnitt, in dem eine Rest-Kautschuk enthaltende Flüssigphase aus den Restfeuchte enthaltenden Kautschukpartikeln zumindest teilweise entfernt wird, mindestens einen Zuführabschnitt für mindestens ein weiteres Polymer und/oder Additive, einen Mischabschnitt, in dem die Kautschukpartikel, das mindestens eine weitere Polymer und die Additive zu einer Schmelze der thermoplastischen Formmasse vermischt werden, sowie eine Austragszone, durch die ein Schmelzestrang aus dem Extruder ausgepresst wird, umfasst.

Der Extruder ist zum Beispiel aufgebaut wie in WO 2015/004112 oder WO 2015/000873 beschrieben.

In die Einzugszone des Extruders werden mittels einer Dosiereinrichtung die Restfeuchte enthaltenden Kautschukpartikel zugeführt.

An die Einzugszone schließt sich der Entwässerungsabschnitt an, der vorzugsweise mindestens ein Stauelement sowie jeweils mindestens eine zugehörige Entwässerungsöffnung enthält, wobei die mindestens eine Entwässerungsöffnung, wie auch die Entwässerungsöffnung der Einzugszone, vorzugsweise mit einer Metalldrahtgewebe-Verbundplatte, einem Feinlochblech oder einer Schlitzlochblende ausgerüstet ist. Alternativ oder zusätzlich kann die mindestens eine Entwässerungsöffnung auch mit einer Stopfschnecke ausgestattet sein. Bevorzugt sind alle Entwässerungsöffnungen mit einer Stopfschnecke ausgestattet.

In dem sich an den Entwässerungsabschnitt anschließenden Zuführabschnitt werden die weiteren Komponenten der thermoplastischen Formmasse vorzugsweise als Schmelze in den Extruder eingeführt.

Der Mischabschnitt ist mit Durchmischungs-, Knet- und/oder anderen Plastifizierungs-Elementen, wie sie üblicherweise in Extrudern eingesetzt werden, versehen.

An den Mischabschnitt kann sich ein mit mindestens einer Entgasungsöffnung versehener Entgasungsabschnitt anschließen, in dem aus der thermoplastischen Formmasse weiteres Wasser oder andere noch in der thermoplastischen Formmasse als Verunreinigungen enthaltene Komponenten als Dampf entfernt werden, wobei die Entgasungsöffnungen offen sein können oder beispielsweise mit einer Stopfschnecke versehen sein können.

Den Abschluss des Extruders bildet die Austragszone mit einem sich an die Austragsöffnung der Austragszone anschließenden Werkzeug, durch das die thermoplastische Formmasse aus dem Extruder ausgetragen wird.

Der eingesetzte Extruder weist mindestens eine Entwässerungsöffnung auf, kann aber auch mehrere Entwässerungsöffnungen, beispielsweise zwei oder drei EntwässerungsÖffnungen, aufweisen. Es ist jedoch auch möglich, dass der Extruder sehr viel mehr Entwässerungsöffnungen, beispielsweise bis zu 30 Entwässerungsöffnungen aufweist.

Die Entwässerungsöffnungen können sich an jeder beliebigen Stelle über den Umfang des Extruder-Gehäuses befinden, beispielsweise an der Oberseite, seitlich oder nach unten weisend. Auch ist es möglich, Entwässerungsöffnungen paarweise gegenüberliegend anzuordnen. Auch jede andere Anordnung der Entwässerungsöffnungen ist denkbar. Auf den Entwässerungsöffnungen können Stopfschnecken angebracht sein.

Die Entwässerung erfolgt in der Regel mit der Förderrichtung stromab der Einzugszone. Im einfachsten Fall liegt nur eine Entwässerungsöffnung vor, die stromab der Einzugszone angeordnet ist.

Die Entwässerungsöffnungen können in an sich bekannter Weise ausgestaltet sein und in ihrer Geometrie bekannten Öffnungen entsprechen, wie sie üblicherweise auch zum Entfernen gasförmiger Stoffe aus einem Extruder verwendet werden. So können Entwässerungsöffnungen verwendet werden, die Aussparungen und/oder Bohrungen im Extrudergehäuse sind. Als Entwässerungsöffnungen sind beispielsweise kreisförmige Bohrungen oder Bohrungen in Form einer Acht, also zwei direkt nebeneinander liegende kreisförmige Bohrungen, geeignet, wobei die Längsachse der Acht beispielsweise rechtwinklig (quer) oder parallel (längs) zur Förderrichtung des Extruders angeordnet sein kann.

Alternativ können die Entwässerungsöffnungen auch rechteckig, quadratisch oder oval geformt sein. Dabei können die quadratischen oder rechteckigen Entwässerungsöffnungen mit abgerundeten Ecken ausgeführt sein. Sofern der Extruder mehr als eine Entwässerungsöffnung umfasst, können die einzelnen Entwässerungsöffnungen auch jeweils eine unterschiedliche Form und/oder Größe aufweisen. Die Entwässerungsöffnungen können alternativ auch aus dem Extrudergehäuse in einer beliebigen Form ausgeschnitten sein, beispielsweise rechteckig, wobei in diesen Ausschnitt dann ein Einsatz mit der gewünschten Form der Entwässerungsöffnung eingesetzt werden kann, wobei zum Beispiel beim Aufsatz einer Stopfschnecke mit einer Doppelschnecke die Form einer Acht für die Entwässerungsöffnung bevorzugt ist.

Der Extruder wird vorzugsweise so betrieben, dass der mittlere Druck im Bereich der Entwässerungsöffnungen im Bereich von 10 bis 55 bar, insbesondere im Bereich von 15 bis 35 bar, liegt. Kurzzeitige Druckspitzen können auch über 55 bar betragen. Der Druck kann mit üblichen Druckmessgeräten überwacht werden. Die Überwachung kann dabei auf direkte Messung des mechanischen Drucks beruhen oder auf Messung des Drucks auf eine Membran, ein Piezoelement, einen Sensor oder weiteren üblichen Bauelementen, wie sie vom Fachmann in der technischen Drucküberwachung eingesetzt werden.

Die Entwässerungsöffnungen können unter Normaldruck, unter Vakuum oder unter Überdruck betrieben werden, wobei alle Entwässerungsöffnungen gleichen oder unterschiedlichen Druck aufweisen können. Durch entsprechenden Über- oder Unterdruck kann der Feuchtegehalt des Extrusionsgutes an dieser Stelle in gewissen Grenzen eingestellt werden. Bei Unterdruck beträgt der absolute Druck üblicherweise 2 bis 900 mbar(abs), bevorzugt 10 bis 800 mbar(abs) und insbesondere 30 bis 500 mbar(abs), und bei Überdruck wird in der Regel ein Druck zwischen 1,1 und 20 bar(abs) eingestellt. Bevorzugt ist jedoch, die Entwässerung unter Normaldruck oder unter Vakuum zu betreiben. Bei Betrieb unter Vakuum erfolgt die Entnahme des Wassers gasförmig und nicht flüssig. Daher werden die unter Vakuum betriebenen Entnahmeöffnungen auch als Entgasungsöffnungen bezeichnet. Im Unterschied dazu bezeichnen die Entwässerungsöffnungen solche Öffnungen, durch die das Wasser flüssig entnommen wird.

Durch das Verschließen der Entwässerungsöffnungen mit der Metalldrahtgewebe-Verbundplatte, dem Feinlochblech oder der Schlitzlochblende oder durch das Anbringen der Stopfschnecke wird weitgehend verhindert, dass der Kautschuk zusammen mit dem Wasser durch die Entwässerungsöffnung aus dem Extruder ausgetragen wird.

Es kann jedoch nicht verhindert werden, dass ein Teil des Kautschuks mit dem Wasser den Extruder durch die Entwässerungsöffnungen verlässt. Üblicherweise enthält die Rest-Kautschuk enthaltende Flüssigphase, die über die Entwässerungsöffnungen aus dem Extruder entnommen wird, noch mehr als 1 Gew.-% Kautschuk, mehr bevorzugt 3 bis 20 Gew.-% Kautschuk und insbesondere 5 bis 15 Gew.-% Kautschuk, jeweils bezogen auf die Gesamtmasse der Rest-Kautschuk enthaltenden Flüssigphase.

Um die Menge des aus dem Prozess entfernten Kautschuks zu minimieren, wird erfindungsgemäß die im Entwässerungsabschnitt abgetrennte Rest-Kautschuk enthaltende Flüssigphase in einem Pufferbehälter gesammelt.

Um zu verhindern, dass die noch in der Flüssigphase enthaltenen Kautschukpartikel akkumulieren, das heißt bei einem Kautschuk mit einer Dichte, die größer ist als die Dichte der Flüssigphase, sedimentieren und bei einem Kautschuk mit einer Dichte, die kleiner ist als die Dichte der Flüssigphase, aufschwimmen, umfasst der Pufferbehälter mindestens einen Rührer, mit dem die Rest-Kautschuk enthaltende Flüssigphase gerührt wird.

Zur Wiederverwendung wird die im Pufferbehälter gesammelte Rest-Kautschuk enthaltenden Flüssigphase in den Fällbehälter zurückgeführt.

Der Pufferbehälter kann jeder beliebige mit einem Rührer ausgerüstete Behälter sein, sofern der Rührer so betrieben werden kann, dass das Akkumulieren der Kautschukpartikel verhindert werden kann. Geeignete Rührer, die im Pufferbehälter eingesetzt werden können, sind zum Beispiel Propeller-Rührer.

Aufgrund des relativ hohen Anteils an Kautschuk in der Rest-Kautschuk enthaltenden Phase, die dem Extruder durch die Entwässerungsöffnungen entnommen wird, ist es bevorzugt, die Rest-Kautschuk enthaltende Flüssigphase nach dem Entfernen aus dem Extruder mit Wasser zu vermischen, um Ablagerungen und/oder Verstopfungen in der Leitung zwischen dem Extruder und dem Pufferbehälter, in den die Rest-Kautschuk enthaltende Flüssigphase eingeleitet wird, zu verhindern. Das Wasser wird dabei vorzugsweise kontinuierlich oder diskontinuierlich direkt im Anschluss an die Entwässerungsöffnung in die den Rest-Kautschuk enthaltende Flüssigphase eingeleitet. Die Zugabe kann jedoch auch an jeder beliebigen anderen Stelle der Leitung zwischen dem Extruder und dem Pufferbehälter erfolgen, wobei die Zugabe direkt im Anschluss an die Entwässerungsöffnung besonders bevorzugt ist.

Die Menge an Wasser, die der den Rest-Kautschuk enthaltende Flüssigphase zugegeben wird, wird vorzugsweise so gewählt, dass die den Rest-Kautschuk enthaltende Flüssigphase nach Zugabe des Wassers noch maximal 15 Gew.-% Kautschuk, mehr bevorzugt 2 bis 12 Gew.-% Kautschuk und insbesondere 4 bis 10 Gew.-% Kautschuk enthält, jeweils bezogen auf die Gesamtmasse der Rest-Kautschuk enthaltenden Flüssigphase.

Es hat sich gezeigt, dass das im Anschluss an die Entwässerungsöffnungen zugegebene Wasser in Kombination mit dem Rühren der den Rest-Kautschuk enthaltenden Flüssigphase im Pufferbehälter ausreichend ist, um auch ein Verstopfen von Rohrleitungen, durch die die Rest-Kautschuk enthaltende Flüssigphase geleitet wird, zu reduzieren oder sogar zu verhindern.

Das Wasser, das der Rest-Kautschuk enthaltenden Flüssigphase zugegeben wird, kann zum Beispiel Frischwasser, insbesondere vollentsalztes Wasser (VE-Wasser) sein.

Da nicht auszuschließen ist, dass die Menge an Rest-Kautschuk enthaltender Flüssigphase, die dem Pufferbehälter zugeführt wird, größer ist als die dem Pufferbehälter entnommene Menge an Rest-Kautschuk enthaltender Flüssigphase, zum Beispiel, wenn die Herstellung und Aufarbeitung des Kautschuks unterbrochen werden muss, die Extrusion jedoch weiter betrieben wird, ist es bevorzugt, wenn der Pufferbehälter einen Überlauf aufweist, über den die Rest-Kautschuk enthaltende Flüssigphase als Abwasser aus dem Prozess abgeführt werden kann. Aufgrund des im Abwasser enthaltenen Kautschuks ist es notwendig, dieses in einer geeigneten Anlage aufzubereiten, bevor das Abwasser an die Umgebung abgegeben oder als Brauchwasser einen weiteren Prozess zugeführt werden kann.

Das weitere Polymer oder weiteren Polymere, die in dem sich an die Entwässerungszone anschließenden Zuführabschnitt für ein weiteres Polymer dem Extruder zugeführt werden, sind abhängig von der herzustellenden thermoplastischen Formmasse.

Bevorzugt ist die thermoplastische Formmasse, die mit dem erfindungsgemäßen Verfahren hergestellt wird, ein Butylacrylat-Styrol-Acrylnitril Copolymer, ein Acrylnitril-Butadien-Styrol Copolymer oder ein Acrylnitril-Styrol-Acrylat-Copolymer.

Im Zuführabschnitt für ein weiteres Polymer werden daher vorzugsweise thermoplastische Polymere zugeführt, die ausgewählt sind aus Styrol-Acrylnitril-Copolymeren (SAN), Polystyrol (PS), Polymethylmethacrylat (PMMA), oder Mischungen daraus.

Dabei sind SAN-Polymere, PMMA oder Mischungen dieser Polymere bevorzugt. Weiterhin können als thermoplastische Polymere, die dem sich an die Entwässerungszone anschließenden Zuführabschnitt zugeführt werden, auch Polycarbonate (PC), Polyalkylenterephthalate wie Polybutylenterephthalat (PBT) und Polyethylenterephthalat (PET), Polyoxymethylen (POM), Polyphenylensulfid (PPS), Polysulfone (PSU), Polyethersulfone (PES), Polyamide (PA) oder Mischungen dieser thermoplastischen Polymere eingesetzt werden. Zudem können auch thermoplastische Elastomere wie thermoplastisches Polyurethan (E-TPU) verwendet werden.

Weiterhin kann das der sich dem Entwässerungsabschnitt anschließenden Zuführabschnitt zugeführte thermoplastische Polymer auch ein Copolymer auf Basis von Styrol/Maleinsäureanhydrid, Styrol/imidiertem Maleinsäureanhydrid, Styrol/Maleinsäureanhydrid/imidiertem Maleinsäureanhydrid, Styrol/Methylmethacrylat/imidiertem Maleinsäureanhydrid, Styrol/Methylmethacrylat, Styrol/Methylmethacrylat/Maleinsäureanhydrid, Methylmethacrylat/imidiertem Maleinsäureanhydrid, Styrol/imidiertem Methylmethacrylat, imidiertem PMMA oder Mischungen dieser Polymere verwenden.

Bei allen genannten Styrol enthaltenden thermoplastischen Polymeren kann das Styrol ganz oder teilweise durch alpha-Methylstyrol oder durch kernalkylierte Styrole oder durch Acrylnitril ersetzt sein. Von den zuletzt genannten thermoplastischen Polymeren sind solche auf Basis von alpha-Methylstyrol/Acrylnitril, Styrol/Maleinsäureanhydrid, Styrol/Methylmethacrylat und Copolymere mit imidiertem Maleinsäureanhydrid bevorzugt.

In den sich an den Zuführabschnitt für mindestens ein weiteres Polymer anschließenden weiteren Abschnitten des Extruders werden die zugeführten Komponenten auf übliche Weise geschmolzen, vermischt, homogenisiert, gegebenenfalls entgast und als Schmelzestrang aus dem Extruder ausgepresst. Der Schmelzestrang kann dann zum Beispiel zu einem Granulat geschnitten werden.

Zur Abpufferung von Schwankungen im Durchsatz in den einzelnen Verfahrensschritten ist es bevorzugt, wenn die den feinteiligen Kautschuk enthaltende Flüssigphase zunächst in einem Rückwasserbehälter gefahren wird, bevor sie in den Fällbehälter zurückgeleitet wird. Dies erlaubt auch eine Regelung der Menge an feinteiligem Kautschuk enthaltender Flüssigphase, die der Dispersion im Fällbehälter zugemischt wird, um zum Beispiel einen gewünschten Gehalt an Feststoff in der Mischung aus der dem Fällbehälter zugeführten aus der Emulsionspolymerisation stammenden Dispersion und der den feinteiligen Kautschuk enthaltenden Flüssigphase einzustellen.

Da die Menge an feinteiligem Kautschuk in der den feinteiligen Kautschuk enthaltenden Flüssigphase nur sehr gering ist und in der Regel nicht größer als 2 Gew.-% und insbesondere im Bereich von 0,01 bis 1 Gew.-% liegt, jeweils bezogen auf die Gesamtmasse der den feinteiligen Kautschuk enthaltenden Flüssigphase, ist es weiterhin bevorzugt, wenn der Rückwasserbehälter ein Setzbehälter ist, in dem sich eine an Kautschuk reiche Phase und eine an Kautschuk arme Phase bilden. Abhängig von der Dichte des Kautschuks kann die an Kautschuk reiche Phase die obere Phase oder die untere Phase sein.

Um zu verhindern, dass die im Rückwasserbehälter enthaltene Flüssigphase durch Einleiten weiterer feinteiligen Kautschuk enthaltender Flüssigphase aufgewirbelt und durchmischt wird und weiterhin eine Schaumbildung im Rückwasserbehälter zu vermeiden, ist es bevorzugt, wenn die den feinteiligen Kautschuk enthaltende Flüssigphase über ein Tauchrohr in den Rückwasserbehälter eingeleitet wird. Insbesondere wenn der Rückwasserbehälter ein Setzbehälter ist, kann hierdurch verhindert werden, dass die sich bereits bildenden an Kautschuk reiche Phase und an Kautschuk arme Phase wieder durchmischen.

Die an Kautschuk reiche Phase kann aus dem Rückwasserbehälter direkt in den Fällbehälter zurückgeleitet werden. Der Gehalt an Kautschuk in der an Kautschuk armen Phase liegt vorzugsweise bei maximal 0,5 Gew.-%, mehr bevorzugt im Bereich von 0,001 bis 0,1 Gew.-% und insbesondere im Bereich von 0,001 bis 0,07 Gew.-%, jeweils bezogen auf die Gesamtmasse der an Kautschuk armen Phase.

Da das Wasser der zurückgeführten an Kautschuk reichen Phase neben dem feinteiligen Kautschuk auch noch gelöstes Salz und/oder Säure der in den Fällbehälter zugeführten Fällungslösung enthält, ist es weiterhin bevorzugt, wenn die direkt in den Fällbehälter zurückgeleitete an Kautschuk reiche Phase vor dem Einleiten in den Fällbehälter mit der ebenfalls in den Fällbehälter eingeleiteten Fällungslösung zusammengeführt wird. Die Mischung der Fällungslösung mit der zurückgeleiteten an Kautschuk reichen Phase vor Einleitung in den Fällbehälter hat den weiteren Vorteil, dass die Bildung unerwünscht großer Kautschukpartikel aufgrund lokaler hoher Konzentrationen der Fällungslösung im Fällbehälter und der sehr schnellen Fällung verhindert werden kann.

Die Bestimmung des Salzgehalts kann beispielsweise durch eine Leitfähigkeitsmessung oder durch Titration erfolgen, die Bestimmung des Säuregehalts durch eine pH-Wert-Bestimmung und die Durchflussmengen, indem jeweils ein geeigneter, dem Fachmann bekannter Durchflussmesser in den Leitungen vor der Mischungsstelle vorgesehen ist. Um die gewünschte Konzentration an Salz und/oder Säure für die Fällung einzustellen, werden die Massenströme der zugeführten Fällungslösung und der zurückgeleiteten an Kautschuk reichen Phase getrennt bestimmt und über eine Verhältnisregelung wird die gewünschte Menge an Fällungslösung zugegeben.

Um auch den Kautschuk aus der an Kautschuk armen Phase zurückzugewinnen und diesen nicht mit dem Abwasser der Entsorgung zuzuführen, wird die an Kautschuk arme Phase vorzugsweise auf-konzentriert und dann dem Fällbehälter zugeführt.

Das bei der Aufkonzentrierung entstehende Abwasser wird entsorgt, wobei die Abwassermenge vorzugsweise der Menge an Wasser entspricht, die mit der Dispersion und der Fällungslösung zugeführt wird, abzüglich der Menge an Wasser, die an anderen Stellen aus dem Prozess entfernt wird, insbesondere dem noch in den Restfeuchte enthaltenden Kautschukpartikeln enthaltenen Wasser. Hierdurch wird ein kontinuierlicher Prozess ermöglicht ohne dass die Menge an Wasser im Prozess durch zurückgeführtes Wasser immer weiter zunimmt.

Um die in der an Kautschuk armen Phase enthaltenen Kautschukpartikel aufzukonzentrieren kann jedes dem Fachmann bekannte Verfahren zur Abtrennung von Feststoffen aus einer Feststoffe enthaltenden Flüssigkeit genutzt werden. Besonders bevorzugt werden die Kautschukpartikel aus der an Kautschuk armen Phase mit einer Filtration auf-konzentriert. Beim Filtrieren der an Kautschuk armen Phase werden ein kautschukreiches Retentat und ein im Wesentlichen kautschukfreies Filtrat erzeugt und das kautschukreiche Retentat wird in den Fällbehälter zurückgeführt.

Die Filtration der an Kautschuk armen Phase kann kontinuierlich betrieben werden. In diesem Fall wird die an Kautschuk arme Phase aufkonzentriert, indem beim Durchströmen des Filterapparats Flüssigkeit durch den Filter gepresst wird. Hierbei entsteht ein kautschukreiches Retentat, das in den Fällbehälter zurückgeführt wird und ein im Wesentlichen kautschukfreies Filtrat, das als Abwasser entsorgt werden kann. Für die Einstellung des Kautschukgehalts im Retentat kann zum Beispiel der Volumenstrom durch den Filter, die Druckdifferenz über den Filter und/oder die Filteroberfläche angepasst werden. Hierbei ist es möglich, nur einen Filter oder zwei oder mehrere Filter zu nutzen, wobei die Filter parallel und/oder in Reihe geschaltet werden können.

Alternativ und bevorzugt wird die Filtration jedoch so betrieben, dass sich der in der an Kautschuk armen Phase enthaltene Kautschuk als Filterkuchen auf dem Filter des Filtrationsapparats anlagert und die Flüssigkeit als im Wesentlichen kautschukfreies Filtrat aus dem Filter abgezogen wird. In diesem Fall wird der entstehende Filterkuchen diskontinuierlich mit VE-Wasser oder filtriertem Rückwasser in den Fällbehälter gespült.

Filter, die genutzt werden können, um den Kautschuk aus der an Kautschuk armen Phase aufzukonzentrieren sind zum Beispiel Kantenspaltfilter. Als Filtermaterial eignen sich zum Beispiel Kantenspalte, wobei das Spaltmaß des Filters vorzugsweise im Bereich von 10 bis 500 µm, mehr bevorzugt im Bereich von 50 bis 250 µm und insbesondere im Bereich von 75 bis 200 µm liegt.

Bei der Filtration scheidet sich üblicherweise Feststoff auf dem Filter ab, wobei sich ein Filterkuchen bildet. Abhängig vom Volumenstrom der an Kautschuk armen Phase, die durch den Filterapparat geleitet wird, kann zumindest ein Teil des Filterkuchens mit der an Kautschuk armen Phase, in der sich bei der Filtration der Kautschuk anreichert, vom Filter gespült werden und mit dem Retentat in den Fällbehälter zurückgeführt werden.

Wenn sich ein Filterkuchen bildet, der mit dem Retentat nicht abgespült werden kann, ist es bevorzugt, den Filter regelmäßig zu spülen. Der Zeitpunkt zu dem der Filter gespült wird, kann dabei zum Beispiel über das Ansteigen der notwendigen Druckdifferenz, die benötigt wird, das Filtrat durch den Filter zu drücken, bestimmt werden. Auch wenn die Filtration so durchgeführt wird, dass der Kautschuk aus der an Kautschuk armen Phase so abgetrennt wird, dass sich ein Filterkuchen bildet, wird der entsprechend entstehende Filterkuchen wie vorstehend beschrieben regelmäßig vom Filter gespült und die Spülflüssigkeit mit dem darin enthaltenen Kautschuk in den Fällbehälter zurückgeleitet.

Wenn ein Filter genutzt wird, bei dem nicht erforderlich ist, einen Überdrück auf der Retentat-Seite und/oder einen Unterdruck auf der Filtratseite anzulegen, kann der Zeitpunkt, zu dem ein Spülen des Filters erforderlich wird, auch anhand des Filtratvolumen-Stroms oder des Feststoffgehalts im Retentat bestimmt werden.

Zum Spülen des Filters kann eine Spülflüssigkeit von der Filtrat-Seite auf die Retentat-Seite durch den Filter geleitet werden, wodurch der Filterkuchen vom Filter gespült wird. Alternativ ist es auch möglich, anstelle der an Kautschuk armen Phase die Spülflüssigkeit dem Filter zuzuführen. Da der Filterkuchen im Wesentlichen Kautschuk enthält, ist es bevorzugt, wenn die Spülflüssigkeit mit dem darin enthaltenen Kautschuk aus dem Filterkuchen in den Fällbehälter eingeleitet wird. Um die Spülflüssigkeit mit dem darin enthaltenen Kautschuk in den Fällbehälter einleiten zu können, wird vorzugsweise eine Spülflüssigkeit eingesetzt, die nur solche Komponenten enthält, die auch in der Flüssigkeit im Fällbehälter enthalten sind. Besonders bevorzugt wird daher als Spülflüssigkeit Wasser eingesetzt.

Das im Wesentlichen kautschukfreie Filtrat wird aus dem Prozess entfernt und vorzugsweise einer Abwasseraufbereitung zugeführt, bevor das Abwasser an die Umgebung abgegeben wird. Alternativ kann das im Wesentlichen kautschukfreie Filtrat auch anstelle des vorstehend beschriebenen Frischwassers, insbesondere VE-Wassers, oder zusammen mit Frischwasser im Anschluss an die Entwässerungsöffnungen der Rest-Kautschuk enthaltenden Flüssigphase zugegeben werden.

Für den Fall, dass die Menge an feinteiligem Kautschuk enthaltender Flüssigphase, die dem Rückwasserbehälter aus der mechanischen Entwässerung zugeführt wird, größer ist als die Mengen an an Kautschuk reicher Phase und an Kautschuk armer Phase, die dem Rückwasserbehälter entnommen werden und so der Füllstand im Rückwasserbehälter einen Maximalfüllstand übersteigen kann, umfasst der Rückwasserbehälter vorzugsweise einen Überlauf, über den ein Abwasserstrom aus dem Rückwasserbehälter ablaufen kann.

Wenn der Kautschuk eine niedrigere Dichte aufweist als die Flüssigkeit, schwimmt dieser im Rückwasserbehälter auf, so dass sich die an Kautschuk reiche Phase im oberen Bereich des Rückwasserbehälters befindet. Aus diesem Grund wird der Überlauf in diesem Fall vorzugsweise im unteren Bereich des Rückwasserbehälters angeordnet, um für den Fall, dass der Füllstand im Rückwasserbehälter einen Maximalfüllstand übersteigt, möglichst nur an Kautschuk arme Phase zu entnehmen. Damit die Flüssigkeit ausströmen kann, ohne ein zusätzliches Ventil vorzusehen, ist es dabei bevorzugt, wenn die den Überlauf bildende Leitung zunächst nach oben bis auf die Höhe des maximalen Füllstands verläuft und dort eine Krümmung von mindestens 90° aufweist, so dass die an Kautschuk arme Phase erst bei Erreichen des maximalen Füllstands aufgrund des hydrostatischen Drucks durch den Überlauf abfließen kann.

Entsprechend sinkt der Kautschuk ab, wenn dieser eine höhere Dichte aufweist als die Flüssigkeit. In diesem Fall befindet sich die an Kautschuk reiche Phase unten im Rückwasserbehälter und die an Kautschuk arme Phase oben, so dass bei einem im oberen Bereich des Rückwasserbehälters, vorzugsweise an der Position, an der sich der maximale Füllstand befindet, der Überlauf angeordnet ist und an Kautschuk arme Phase in den Überlauf strömt, wenn der Füllstand im Rückwasserbehälter zu hoch wird.

Insbesondere bei Einsatz des Rückwasserbehälters in einer Swing-Anlage, in der sowohl Kautschuk mit einer niedrigeren Dichte als auch Kautschuk mit einer höheren Dichte als die Flüssigkeit hergestellt wird, ist es bevorzugt, einen Überlauf oben am Rückwasserbehälter, vorzugsweise an der Position des maximalen Füllstandes anzuordnen und einen Überlauf am Boden des Rückwasserbehälters, wobei einem Kautschuk mit einer Dichte, die kleiner ist als die Dichte der Flüssigkeit, der Überlauf oben am Rückwasserbehälter geschlossen wird und bei einem Kautschuk mit einer Dichte, die größer ist als die Dichte der Flüssigkeit, der Überlauf am Boden des Rückwasserbehälters geschlossen wird. Weiter bevorzugt ist es, wenn der Überlauf am Boden über eine Leitung mit dem Überlauf oben am Rückwasserbehälter verbunden ist, wobei die Leitung stromab eines Absperrorgans in den Überlauf mündet und die Mündung der Leitung in den Überlauf vorzugsweise auf gleicher Höhe ist wie der Anschluss des Überlaufs an den Rückwasserbehälter.

Sobald der Füllstand im Rückwasserbehälter den maximalen Füllstand übersteigt, strömt an Kautschuk reiche Phase in den Überlauf. Um zu verhindern, dass die an Kautschuk reiche Phase, die dann in den Überlauf strömt, zu einer Abwasserentsorgung geleitet und der in der an Kautschuk reichen Phase enthaltene Kautschuk verloren geht, wird in diesem Fall vorzugsweise eine Rückführleitung vorgesehen, die aus dem Überlauf abzweigt und in die Leitung mündet, durch die die an Kautschuk arme Phase zur Aufkonzentrierung, insbesondere der Filtration strömt. Auf diese Weise kann verhindert werden, dass die durch den Überlauf entnommene Flüssigkeit, die noch Kautschuk enthält, einer Entsorgung zugeführt wird und so der enthaltene Kautschuk als Abfall aus dem Prozess entfernt wird.

Die im Pufferbehälter gesammelte Rest-Kautschuk enthaltende Flüssigphase kann entweder direkt in den Fällbehälter zurückgeführt werden oder alternativ in den Rückwasserbehälter eingeleitet werden. Im zweiten Fall wird die Rest-Kautschuk enthaltende Flüssigphase mit der den feinteiligen Kautschuk enthaltenden Phase, die bei der mechanischen Entwässerung der wässrigen, Kautschukpartikel enthaltenden Suspension anfällt, gemischt. Um zu verhindern, dass die im Rückwasserbehälter enthaltene Flüssigphase durch Einleiten der Rest-Kautschuk enthaltenden Flüssigphase aufgewirbelt und durchmischt wird und weiterhin eine Schaumbildung im Rückwasserbehälter zu vermeiden, ist es bevorzugt, wenn die Rest-Kautschuk enthaltende Phase in die Leitung eingespeist wird, durch die die feinteiligen Kautschuk enthaltende Flüssigphase in den Rückwasserbehälter eingeleitet wird.

Alternativ zum Einsatz eines Rückwasserbehälters ist es auch möglich, die den feinteiligen Kautschuk enthaltende Flüssigphase, die beim mechanischen Entwässern der wässrigen, Kautschukpartikel enthaltenden Suspension anfällt, vor dem Zurückführen in den Fällbehälter in den Pufferbehälter einzuleiten und mit der im Entwässerungsabschnitt entfernten Rest-Kautschuk enthaltenden Flüssigphase zu mischen. Dies hat insbesondere den Vorteil, dass durch das Einleiten der feinteiligen Kautschuk enthaltenden Flüssigphase in den Pufferbehälter der Feststoffgehalt im Pufferbehälter gesenkt wird, wodurch die Neigung zur Bildung von Ablagerungen oder Verstopfungen insbesondere in der Verbindungsleitung vom Pufferbehälter in den Fällbehälter weiter reduziert wird.

Unabhängig davon, ob die den feinteiligen Kautschuk enthaltende Flüssigphase in den Pufferbehälter eingeleitet wird und in diesem mit der den Rest-Kautschuk enthaltenden Flüssigphase gemischt wird, die im Pufferbehälter gesammelte Rest-Kautschuk enthaltende Flüssigphase zunächst in den Rückwasserbehälter eingeleitet wird oder die den feinteiligen Kautschuk enthaltende Flüssigphase aus dem Rückwasserbehälter und die den Rest-Kautschuk enthaltende Flüssigphase aus dem Pufferbehälter jeweils separat in den Fällbehälter eingeleitet werden, ist es bevorzugt, wenn die aus dem Pufferbehälter in den Fällbehälter zurückgeführte Rest-Kautschuk enthaltende Flüssigphase und/oder die feinteiligen Kautschuk enthaltende Flüssigphase oder die Mischung aus der den feinteiligen Kautschuk enthaltenden Flüssigphase und Rest-Kautschuk enthaltenden Flüssigphase vor dem Einleiten in den Fällbehälter mit der Fällungslösung gemischt wird.

Als Pumpe, mit der die die gesinterten Kautschukpartikel enthaltende Flüssigphase oder, wenn der separate Sinterschritt nicht durchgeführt wurde, die in Schritt (a) erhaltene Kautschukpartikel enthaltende Suspension in die mechanische Entwässerung gefördert wird, wird vorzugsweise eine als Freistrompumpe ausgeführte Kreiselpumpe eingesetzt. Als Pumpe, mit der die an Kautschuk arme Phase in die Filtration gefördert wird, wird vorzugsweise eine Exzenterschneckenpumpe eingesetzt.

Aufgrund des Anteils an Feststoffen in der Rest-Kautschuk enthaltenden Flüssigphase, die in den Pufferbehälter eingeleitet und anschließend aus dem Pufferbehälter entweder in den Rückwasserbehälter oder direkt in den Fällbehälter zurückgeführt wird, ist es ebenfalls bevorzugt, eine als Freistrompumpe ausgeführte Kreiselpumpe einzusetzen.

Bei einer Anordnung des Pufferbehälters unterhalb des Extruders ist es möglich, dass das über die Entwässerungsöffnung ausgetretene Wasser direkt in den Pufferbehälter fließt. In diesem Fall ist es nicht notwendig, eine Pumpe für den Transport vom Extruder in den Pufferbehälter einzusetzen. Für den Transport der Rest-Kautschuk enthaltenden Flüssigphase in den Pufferbehälter wird ebenfalls keine separate Pumpe benötigt, wenn der Druck, mit dem die Rest-Kautschuk enthaltende Flüssigphase aus dem Extruder austritt, größer ist als der Druck im Pufferbehälter.

Für den Transport der wässrigen, Kautschukpartikel enthaltenden Suspension und/oder für den Transport der an Kautschuk reichen Phase und/oder für den Transport der Rest-Kautschuk enthaltenden Flüssigphase wird vorzugsweise jeweils eine als Freistrompumpe ausgeführte Kreiselpumpe eingesetzt. Eine bevorzugte Kreiselpumpe weist ein offenes oder halboffenes Laufrad auf, wobei das Laufrad ein Radialrad ist, das einen großen Durchgang für die im Fördermedium enthaltenen Feststoffe hat. Zudem ist ein solches offenes oder halboffenes Laufrad am wenigsten störanfällig bei Einsatz für die Förderung von Partikel enthaltenden Flüssigkeiten.

Der Einsatz einer als Freistrompumpe ausgeführten Kreiselpumpe oder einer Exzenterschneckenpumpe erlaubt daher den Transport der die Kautschukpartikel enthaltenden Flüssigphase, ohne dass die Pumpe durch die in der Flüssigphase enthaltenen Kautschukpartikel verstopfen kann, da ein ausreichend großer Strömungskanal umfasst ist, der von der Flüssigkeit ohne Kontakt mit dem Laufrad der Pumpe durchströmt werden kann.

Um Verschleiß oder Blockieren der Exzenterschneckenpumpe durch Quellen des Kunststoffs aufgrund möglicherweise noch enthaltener Restmonomere zu verhindern und damit eine gleichmäßige Förderung der die Kautschukpartikel enthaltenden Flüssigphase zu ermöglichen, ist es weiterhin bevorzugt, wenn der Stator und/oder der Rotor der Exzenterschneckenpumpe aus chlorsulfoniertem Polyethylenkautschuk (CMS), beispielsweise erhältlich als Hypalon^{®} der DuPont Performance Elastomers gefertigt ist oder hiermit beschichtet ist. Alternativ ist es auch möglich, den Stator und/oder Rotor der Exzenterschneckenpumpe aus einem Metall, beispielsweise aus Stahl oder Aluminium, zu fertigen. Besonders bevorzugt ist es wenn entweder der Stator oder der Rotor aus CMS gefertigt ist und das jeweils andere Teil aus einem Metall.

Da die Kautschukpartikel bei zunehmender Verweilzeit weiter agglomerieren und damit größer werden, ist es weiterhin bevorzugt, wenn die Partikelgröße der in Schritt (a) gefällten und/oder der in Schritt (b) gesinterten Kautschukpartikel beziehungsweise der in der Rest-Kautschuk enthaltenden Flüssigphase gesteuert werden kann. Hierzu ist es zum Beispiel möglich, eine Pumpe einzusetzen, die ein Schneidwerkzeug zur Partikelzerkleinerung enthält und/oder der Pumpe einen Partikelzerkleinerer vorzuschalten.

Geeignete Partikel-Zerkleinerer sind zum Beispiel Nassmahlapparate, die von der die Kautschukpartikel enthaltenden Flüssigphase durchströmt werden und die üblicherweise Schneidwerkzeuge enthalten, wobei die Schneidwerkzeuge starr im Partikelzerkleinerer enthalten sein können oder als Rotor und Stator ausgeführt sein können. Geeignete Partikelzerkleinerer sind zum Beispiel Siefer Trigonal^{®}-Maschinen.

Pumpen, die Rotor-Stator-Zahnmischelemente zur Partikelzerkleinerung enthalten sind beispielsweise unter der Bezeichnung Supraton^{®} inline homogenizers von BWS Technologie GmbH erhältlich.

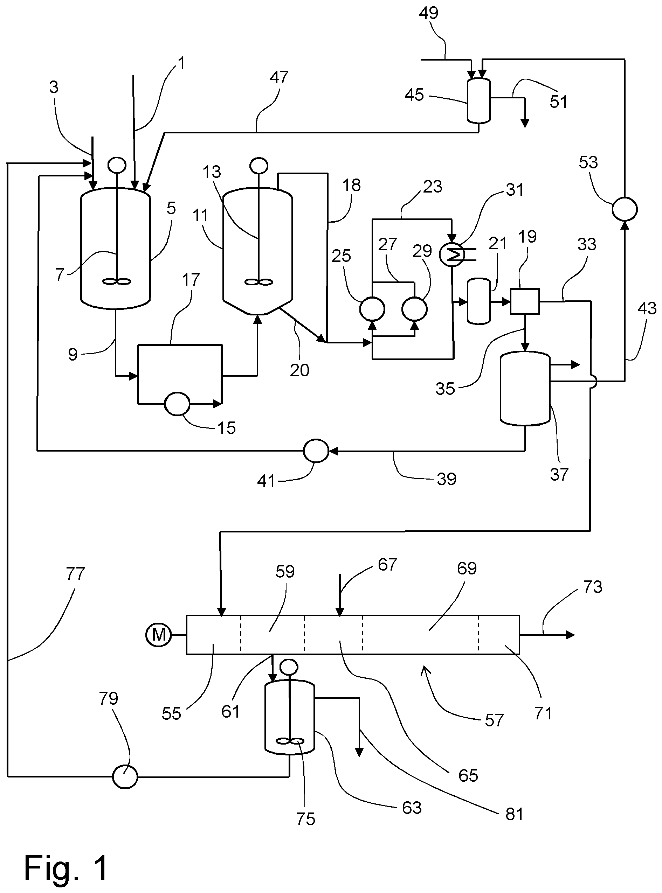

Ein Ausführungsbeispiel der Erfindung ist in der Figur dargestellt und wird in der nachfolgenden Beschreibung näher erläutert.

Die einzige Figur zeigt ein Fließdiagramm des erfindungsgemäßen Verfahrens.

Zur Aufbereitung von Kautschuken aus einer den Kautschuk enthaltenden Dispersion wird die den Kautschuk enthaltende Dispersion 1, die beispielsweise einer Emulsionspolymerisation entstammt, zusammen mit einer Fällungslösung 3 in einen Fällbehälter 5 eingeleitet. Die Dispersion 1 wird dabei vorzugsweise allein aufgrund der Schwerkraft in den Fällbehälter 5 gefördert. Sollte eine Förderung durch Schwerkraft nicht möglich sein, insbesondere wenn der Dispersionslagertank, in dem die Dispersion zwischengespeichert wird, zu niedrig steht, wird die Dispersion 1 vorzugsweise mit einer Schlauchpumpe in den Fällbehälter 5 gefördert.

Im Fällbehälter werden die den Kautschuk enthaltende Dispersion 1 und die Fällungslösung 3 mit einem Mischaggregat 7, beispielsweise einem Rührer, durchmischt, wobei eine wässrige, Kautschukpartikel enthaltende Suspension entsteht. Die wässrige, Kautschukpartikel enthaltende Suspension 9 wird aus dem Fällbehälter entnommen und einem optionalen Sinterbehälter 11 zugeführt, in dem die Kautschukpartikel zu größeren Partikeln agglomerieren. Um ein Absetzen der Kautschukpartikel zu verhindern, wird die im Sinterbehälter 11 enthaltene, Kautschukpartikel enthaltende Suspension ebenfalls mit Hilfe eines Mischaggregats 13, beispielsweise einem Rührer, durchmischt.

Um die wässrige, die Kautschukpartikel enthaltende Suspension 9 aus dem Fällbehälter 5 in den Sinterbehälter 11 zu fördern, ist in der den Fällbehälter 5 und den Sinterbehälter 11 verbindenden Leitung eine erste Pumpe 15 aufgenommen. Vorzugsweise ist die erste Pumpe 15 Teil eines Umpumpkreises 17, in dem insbesondere bei Ausfall der Abnahme aus dem Sinterbehälter 11, beispielsweise bei Ausfall von dem Sinterbehälter nachfolgenden Anlagenteilen, die Kautschukpartikel enthaltende Suspension 9 in Bewegung gehalten wird und so eine Sedimentation der Partikel verhindert wird. Die erste Pumpe 15 ist dabei vorzugsweise eine als Freistrompumpe ausgeführte Kreiselpumpe.

Aus dem Sinterbehälter 11 wird die nun größere Kautschukpartikel enthaltende Suspension 18 einer mechanischen Entwässerung 19 zugeführt. Die mechanische Entwässerung 19 kann dabei zum Beispiel durch Zentrifugation oder Filterung erfolgen, wobei eine Zentrifugation bevorzugt ist. Zur Entleerung des Sinterbehälters 11 ist vorzugsweise eine Entleerungsleitung 20 am Boden des Sinterbehälters vorgesehen.

Im Normalbetrieb ist die Entleerungsleitung 20 geschlossen und die im Sinterbehälter erzeugte größere Kautschukpartikel enthaltende wässrige Suspension 18 wird über die Entnahmeleitung am Kopf des Sinterbehälters 11 entnommen.

Insbesondere bei einer batchweisen mechanischen Entwässerung 19 ist es erforderlich, dass die der mechanischen Entwässerung 19 zugeführte wässrige, Kautschukpartikel enthaltende Suspension zwischengespeichert wird. Hierzu kann zum Beispiel ein Pufferbehälter 21 vorgesehen sein, in dem die wässrige, Kautschukpartikel enthaltende Suspension 18 zwischengespeichert wird. Um zu verhindern, dass Kautschukpartikel aus der Suspension sedimentieren, ist es bevorzugt, wenn der Pufferbehälter 21 ein Mischaggregat, beispielsweise einen Rührer, aufweist, mit dem die Suspension gerührt werden kann.

Alternativ oder zusätzlich ist es weiterhin bevorzugt, wenn, wie hier dargestellt, ein zweiter Umpumpkreis 23 vorgesehen ist, in dem die wässrige, Kautschukpartikel enthaltende Suspension umgepumpt werden kann. Im zweiten Umpumpkreis 23 wird die wässrige, Kautschukpartikel enthaltende Suspension durchmischt, so dass die Kautschukpartikel nicht ausfallen. Der zweite Umpumpkreis 23 ist insbesondere dann vorteilhaft, wenn die mechanische Entwässerung kontinuierlich durchgeführt wird.

Wenn die mechanische Entwässerung 19 kontinuierlich betrieben wird, ist es ausreichend, den zweiten Umpumpkreis 23 vorzusehen, es kann jedoch auch zusätzlich oder alternativ der Pufferbehälter 21 der mechanischen Entwässerung 19 vorgeschaltet sein.

Wenn die mechanische Entwässerung 19 batchweise betrieben wird, ist der Pufferbehälter 21 notwendig, um die Suspension zwischenzuspeichern, bevor diese der mechanischen Entwässerung 19 zugeführt wird. Es ist jedoch auch hier möglich, wie in der Figur dargestellt, dem Pufferbehälter 21 den Umpumpkreis 23 vorzuschalten.

Sowohl für den Transport der wässrigen, Kautschukpartikel enthaltende Suspension aus dem Sinterbehälter 11 in die mechanische Entwässerung 19 als auch für die Kreisführung im Umpumpkreis 23 ist eine zweite Pumpe 25 im Umpumpkreis 23 aufgenommen. Weiterhin ist es bevorzugt, wenn ein Bypass 27 vorgesehen ist, mit dem die zweite Pumpe 25 umgangen werden kann, wobei im Bypass 27 eine dritte Pumpe 29 aufgenommen ist.

Alternativ zu der hier dargestellten Ausführungsform können die zweite Pumpe 25 und die dritte Pumpe 29 auch in Reihe geschaltet sein. Dies ist insbesondere dann vorteilhaft, wenn die dritte Pumpe 29 keinen ausreichend hohen Druck gegenüber der zweiten Pumpe 25 aufbauen kann, da ein diesem Fall eine Kreisströmung von der Druck- auf die Saugseite entstehen würde.

Die zweite Pumpe 25 und die dritte Pumpe 29 sind vorzugsweise ebenso wie die erste Pumpe 15 eine als Freistrompumpe ausgeführte Kreiselpumpe.

Da die Partikel im Umpumpkreis 23 weiter agglomerieren können, ist es weiterhin bevorzugt, wenn die zweite Pumpe 25 und/oder die dritte Pumpe 29 mit einem Schneidwerkzeug zur Partikelzerkleinerung ausgestattet sind. Durch den Einsatz des Schneidwerkzeugs kann die Partikelgröße der Kautschukpartikel auf eine gewünschte Größe eingestellt werden und Partikel, die aufgrund von Agglomeration eine unerwünschte Größe erreichen, werden zerkleinert. Insbesondere dann, wenn die Kautschukpartikel enthaltende Suspension 18 direkt in die mechanische Entwässerung 19 gefördert wird, ist es bevorzugt, wenn die zweite Pumpe 25 und die dritte Pumpe 29 in Reihe geschaltet sind, wobei in diesem Fall die zweite Pumpe 25 vorzugsweise kein Schneidwerkzeug aufweist und den notwendigen Druck aufbaut und die dritte Pumpe 29 mit Schneidwerkzeug der zweiten Pumpe nachgeschaltet ist. Wenn ein Pufferbehälter 21 vorhanden ist, ist kein signifikanter Druckaufbau notwendig und die zweite Pumpe 25 und die dritte Pumpe 20 können parallel laufen.

Alternativ oder zusätzlich zu einer Pumpe mit einem Schneidwerkzeug kann im Umpumpkreis 23 auch ein Partikelzerkleinerer aufgenommen sein, mit dem die Entstehung von zu großen Kautschukpartikel verhindert wird. Der Partikelzerkleinerer ist dabei vorzugsweise ein Nassmahlapparat.

Das Sintern der Kautschukpartikel im Sinterbehälter 11 erfolgt in der Regel bei einer Temperatur, die oberhalb der Temperatur liegt, bei der die mechanische Entwässerung 19 durchgeführt wird. Zur Abkühlung der wässrigen, Kautschukpartikel enthaltenden Suspension ist daher vorzugsweise ein Wärmetauscher 31 in der Verbindungsleitung vom Sinterbehälter 11 in die mechanische Entwässerung 19 vorgesehen. Wenn zwischen dem Sinterbehälter 11 und der mechanischen Entwässerung 19 ein Umpumpkreis 23 vorgesehen ist, so befindet sich der Wärmtauscher 31 vorzugsweise an einer Position im Umpumpkreis, durch die die wässrige, Kautschukpartikel enthaltende Suspension auch dann strömt, wenn diese direkt vom Sinterbehälter 11 in die mechanische Entwässerung 19 eingeleitet wird und nicht im Kreis im Umpumpkreis strömt. Bei Einsatz eines Pufferbehälters 21 ist es alternativ auch möglich, den Pufferbehälter 21 mit einer Kühlung, beispielsweise durch einen Doppelmantel oder im Pufferbehälter verlaufende Kühlrohre, zu temperieren.

In der mechanischen Entwässerung 19 werden die Kautschukpartikel aus der wässrigen, Kautschukpartikel enthaltenden Suspension abgetrennt, wobei Restfeuchte enthaltende Kautschukpartikel 33 und eine feinteiligen Kautschuk enthaltende Flüssigphase 35 erhalten werden.

Die feinteiligen Kautschuk enthaltende Flüssigphase 35 wird in einen Rückwasserbehälter 37 eingeleitet. Der Rückwasserbehälter 37 ist vorzugsweise ein Setzbehälter, in dem der feinteilige Kautschuk aus der den feinteiligen Kautschuk enthaltenden Flüssigphase akkumuliert, so dass eine an Kautschuk reiche Phase und eine an Kautschuk arme Phase entstehen.

Der Anteil an Kautschuk in der an Kautschuk reiche Phase 39 ist dabei vorzugsweise so groß, dass die an Kautschuk reiche Phase direkt aus dem Rückwasserbehälter 37 entnommen und in den Fällbehälter 5 zurückgeführt werden kann.

Um die an Kautschuk reiche Phase 39 aus dem Rückwasserbehälter 37 in den Fällbehälter 5 zu leiten, kann in der Verbindungsleitung vom Rückwasserbehälter 39 in den Fällbehälter 5 eine Pumpe 41 aufgenommen sein. Bevorzugt ist es jedoch, wenn der Rückwasserbehälter 37 höher als der Fällbehälter 5 positioniert ist, so dass die an Kautschuk reiche Phase 39 rein schwerkraftgetrieben in den Fällbehälter 5 strömen kann, so dass die Pumpe 41 nicht benötigt wird.

Weiterhin ist es bevorzugt, wenn die rückgeführte, an Kautschuk reiche Phase 39 vor dem Einleiten in den Fällbehälter 5 mit der Fällungslösung 3 gemischt wird.

Um auch den in der an Kautschuk armen Phase 43 enthaltenen Kautschuk als Produkt zu erhalten und nicht mit dem Abwasser aus dem Prozess zu entsorgen, wird die an Kautschuk arme Phase 43 aus dem Rückwasserbehälter 37 einer Filtration 45 zugeführt. In der Filtration 45 wird der Kautschuk aus der an Kautschuk armen Phase aufkonzentriert, so dass ein kautschukreiches Retentat 47 entsteht, das in den Fällbehälter 5 eingeleitet wird.

Wenn die Filtration 45 so durchgeführt wird, dass auf dem Filter im Filtrationsapparat ein Filterkuchen entsteht, wird dieser vorzugsweise regelmäßig abgespült und die Spüllösung mit dem darin enthaltenen Kautschuk als kautschukreiches Retentat 47 in den Fällbehälter 5 eingeleitet. Um keine unerwünschten Komponenten in den Fällbehälter 5 einzuleiten erfolgt die Rückspülung vorzugsweise mit Wasser, insbesondere mit vollentsalztem Wasser 49. Alternativ kann auch Filtrat 51 zur Rückspülung verwendet werden.

Die Porengröße des für die Filtration 45 eingesetzten Filters wird vorzugsweise so gewählt, dass im Wesentlichen aller in der an Kautschuk armen Phase enthaltene feinteilige Kautschuk abgetrennt wird, so dass ein im Wesentlichen kautschukfreies Filtrat 51 entsteht, das als Abwasser abgeführt und einer Abwasseraufbereitung zugeführt und dann entsorgt werden kann.

Für die Förderung der an Kautschuk armen Phase 43 in die Filtration 45 wird vorzugsweise eine vierte Pumpe 53 eingesetzt. Hierbei kann jede Pumpe verwendet werden, mit der eine nur einen geringen Feststoffanteil enthaltende Flüssigphase gefördert werden kann. Geeignete Pumpen sind zum Beispiel Kreiselpumpen oder Exzenterschneckenpumpen. Bei Verwendung einer Exzenterschneckenpumpe ist es besonders bevorzugt, wenn Stator und/oder der Rotor der Exzenterschneckenpumpe aus chlorsulfoniertem Polyethylenkautschuk (CMS) gefertigt sind.

Die der mechanischen Entwässerung 19 entnommenen Restfeuchte enthaltenden Kautschukpartikel 33 werden einer Einzugszone 55 eines Extruders 57 zur Herstellung einer thermoplastischen Formmasse, insbesondere von ABS oder ASA, zugeführt. Über die Einzugszone werden die Restfeuchte enthaltenden Kautschukpartikel unter Druckaufbau in einen Entwässerungsabschnitt 59 des Extruders 57 geleitet. Im Entwässerungsabschnitt 59 wird weiteres Wasser aus den Restfeuchte enthaltenden Kautschukpartikeln abgequetscht und über mindestens eine Entwässerungsöffnung 61 in einen Pufferbehälter 63 eingeleitet.

Um zu verhindern, dass die von der Entwässerungsöffnung 61 in den Pufferbehälter 63 führende Leitung verstopft, ist es bevorzugt, wenn Wasser kontinuierlich oder diskontinuierlich in diese Leitung eingeleitet wird. Bevorzugt wird das Wasser direkt im Anschluss an die Entwässerungsöffnung 61 eingeleitet. Das Wasser kann Frischwasser, insbesondere vollentsalztes Wasser, sein oder es kann das in der Filtration 45 anfallende Filtrat 51 eingespeist werden.

Die entwässerten Kautschukpartikel werden einem Zuführabschnitt 65 für mindestens ein weiteres Polymer und/oder Additive zugeführt, wobei dem Zuführabschnitt 65 zur Herstellung der thermoplastischen Formmasse insbesondere ein thermoplastisches Polymer 67, beispielsweise SAN-Copolymer, zugeführt wird.

In einem sich dem Zuführabschnitt 65 anschließenden Mischabschnitt 69 wird das thermoplastische Polymer mit dem Kautschuk vermischt und zu der thermoplastischen Formmasse homogenisiert.

An den Mischabschnitt 69, an dessen Anfang und Ende Entgasungsöffnungen angebracht sein können, schließt sich eine Austragszone 71 an, aus der die thermoplastische Formmasse 73, vorzugsweise in Form eines Schmelze-Strangs, der dann zu einem Granulat geschnitten werden kann, ausgetragen wird. Besonders bevorzugt ist die thermoplastische Formmasse ein ABS-Copolymer oder ein ASA-Copolymer.

Da die dem Pufferbehälter 63 zugeführte Flüssigphase noch Rest-Kautschuk enthält, weist der Pufferbehälter 63 einen Rührer 75 auf, mit dem der Rest-Kautschuk in der Flüssigphase in Suspension gehalten wird und verhindert wird, dass der Rest-Kautschuk akkumuliert. Abhängig davon, ob ein Kautschuk eingesetzt wird, der eine Dichte aufweist, die niedriger ist als die Dichte der Flüssigkeit oder ein Kautschuk mit einer Dichte, die größer ist als die Dichte der Flüssigkeit, kann der Kautschuk aufschwimmen oder sedimentieren, wenn die den Rest-Kautschuk enthaltende Flüssigphase im Pufferbehälter 63 nicht gerührt wird.

Aus dem Pufferbehälter 63 wird die Rest-Kautschuk enthaltende Flüssigphase 77 in den Fällbehälter 5 zurückgeführt. Hierbei ist es besonders bevorzugt, wenn die den Rest-Kautschuk enthaltenden Flüssigphase 77 vor der Einleitung in den Fällbehälter 5 mit der Fällungslösung 3 gemischt wird. Hierzu können, wie hier dargestellt, sowohl die an Kautschuk reiche Phase 39 und die Rest-Kautschuk enthaltende Flüssigphase 77 an unterschiedlichen Positionen in eine Zuführleitung für die Fällungslösung 3 eingeleitet werden oder es können zwei getrennte Zuführleitungen für die Fällungslösung 3 vorgesehen sein, wobei in eine Zuführleitung die an Kautschuk reiche Phase 39 eingeleitet wird und in die andere die Rest-Kautschuk enthaltende Phase 77.

Weiterhin ist es auch möglich, die an Kautschuk reiche Phase 39 und die Rest-Kautschuk enthaltende Phase 77 zu mischen, bevor diese mit der Fällungslösung 3 vermischt werden.

Neben den vorstehend beschriebenen Varianten ist es alternativ auch möglich, die Rest-Kautschuk enthaltende Phase 77 nicht in den Fällbehälter 5 einzuleiten sondern in den Rückwasserbehälter 37. In diesem Fall werden die Rest-Kautschuk enthaltende Phase 77 und die feinteiligen Kautschuk enthaltende Flüssigphase 35 direkt im Rückwasserbehälter 37 zusammengeführt. Wenn die Rest-Kautschuk enthaltende Phase 77 in den Rückwasserbehälter 37 eingeleitet werden soll, ist es besonders bevorzugt, wenn die Rest-Kautschuk enthaltende Phase 77 in die den feinteiligen Kautschuk enthaltende Flüssigphase 35 eingeleitet wird, bevor diese in den Rückwasserbehälter 37 eingeleitet wird. Hierdurch können insbesondere unerwünschte Verwirbelungen an der Flüssigkeitsoberfläche im Rückwasserbehälter 37 vermieden werden. Wenn die Rest-Kautschuk enthaltende Phase 77 direkt in den Rückwasserbehälter 37 eingeleitet wird, ist es bevorzugt, wenn diese analog der feinteiligen Kautschuk enthaltenden Flüssigphase 35 über ein Tauchrohr in den Rückwasserbehälter 37 eingeleitet wird.

Für die Förderung der Rest-Kautschuk enthaltenden Flüssigphase 77 ist vorzugsweise eine Pumpe 79 vorgesehen, die als als Freistrompumpe ausgeführte Kreiselpumpe ausgeführt ist. Hierbei wird insbesondere eine Kreiselpumpe eingesetzt, die ein offenes oder halboffenes Laufrad aufweist, um ein Blockieren der Pumpe 79 zu verhindern.

Um zu verhindern, dass der Pufferbehälter 63 keine Rest-Kautschuk enthaltende Flüssigphase aus dem Entwässerungsabschnitt 59 mehr aufnehmen kann, zum Beispiel, wenn die Extrusion noch weiter betrieben wird, jedoch die Fällung unterbrochen werden muss und so keine Rest-Kautschuk enthaltende Flüssigphase 77 in den Fällbehälter 5 geleitet werden kann, weist der Pufferbehälter 63 vorzugsweise einen Überlauf 81 auf.

Über den Überlauf kann bei Erreichen eines maximalen Füllstandes Rest-Kautschuk enthaltende Flüssigphase aus dem Pufferbehälter 63 abfließen.

Hierbei wird die über den Überlauf 81 abfließende Rest-Kautschuk enthaltende Flüssigphase üblicherweise nach einer entsprechenden Aufarbeitung als Abwasser entsorgt.

## Patentansprüche

1. Verfahren zur Herstellung von thermoplastischen Formmassen (73), umfassend:
(a) Zufuhr einer einen Kautschuk enthaltenden Dispersion (1) sowie einer Fällungslösung (3) in einen Fällbehälter (5), wobei eine wässrige, Kautschukpartikel enthaltende Suspension (9) erzeugt wird,
(b) gegebenenfalls Sintern der in der wässrigen, Kautschukpartikel enthaltenden Suspension (9) enthaltenen Kautschukpartikel zu größeren Partikeln;
(c) mechanisches Entwässern der wässrigen, Kautschukpartikel enthaltenden Suspension, wobei Restfeuchte enthaltende Kautschukpartikel (33) und eine feinteiligen Kautschuk enthaltende Flüssigphase (35) erhalten werden;
(d) Zufuhr der Restfeuchte enthaltenden Kautschukpartikel (33) in einen Extruder (57), wobei der Extruder (57) eine Einzugszone (55), in die die Restfeuchte enthaltenden Kautschukpartikel (33) zugeführt werden, einen Entwässerungsabschnitt (59), in dem eine Rest-Kautschuk enthaltende Flüssigphase aus den Restfeuchte enthaltenden Kautschukpartikeln entfernt wird, mindestens einen Zuführabschnitt (65) für mindestens ein weiteres Polymer (67) und/oder Additive, einen Mischabschnitt (69), in dem die Kautschukpartikel, das mindestens eine weitere Polymer und die Additive zu einer Schmelze der thermoplastischen Formmasse (73) vermischt werden, sowie eine Austragszone (71), durch die ein Schmelzestrang aus dem Extruder (57) ausgepresst wird, umfasst,
wobei die im Entwässerungsabschnitt (59) abgetrennte Rest-Kautschuk enthaltende Flüssigphase in einem Pufferbehälter (63) gesammelt wird, wobei der Pufferbehälter (63) mindestens einen Rührer (75) umfasst, mit dem die Rest-Kautschuk enthaltende Flüssigphase gerührt wird, um ein Akkumulieren der in der Flüssigkeit noch enthaltenen Kautschukpartikel zu verhindern, und Zurückführen der im Pufferbehälter (63) gesammelten Rest-Kautschuk enthaltenden Flüssigphase (77) in den Fällbehälter (5).

2. Verfahren gemäß Anspruch 1, **dadurch gekennzeichnet, dass** die, feinteiligen Kautschuk enthaltende Flüssigphase in den Fällbehälter (5) zurückgeführt wird.

3. Verfahren gemäß Anspruch 1 oder 2, **dadurch gekennzeichnet, dass** die Rest-Kautschuk enthaltende Flüssigphase nach Entfernen aus dem Extruder (57) mit Wasser vermischt wird.

4. Verfahren gemäß Anspruch 2 oder 3, **dadurch gekennzeichnet, dass** die feinteiligen Kautschuk enthaltende Flüssigphase vor dem Zurückführen in den Fällbehälter (5) in den Pufferbehälter (63) eingeleitet und mit der im Entwässerungsabschnitt (59) entfernten Rest-Kautschuk enthaltenden Flüssigphase gemischt wird.

5. Verfahren gemäß einem der Ansprüche 1 bis 4, **dadurch gekennzeichnet, dass** die aus dem Pufferbehälter (63) in den Fäll-Behälter (5) zurückgeführte Rest-Kautschuk enthaltende Flüssigphase (77) und/oder die, feinteiligen Kautschuk enthaltende Flüssigphase vor dem Einleiten in den Fällbehälter (5) mit der Fällungslösung (3) gemischt wird.

6. Verfahren gemäß einem der Ansprüche 1 bis 5, **dadurch gekennzeichnet, dass** der Pufferbehälter (63) einen Überlauf (81) aufweist, über den die Rest-Kautschuk enthaltende Flüssigphase als Abwasser aus dem Prozess abgeführt werden kann.

7. Verfahren gemäß Anspruch 2, **dadurch gekennzeichnet, dass** die, feinteiligen Kautschuk enthaltende Flüssigphase in einem Rückwasserbehälter (37) gesammelt wird.

8. Verfahren gemäß Anspruch 7, **dadurch gekennzeichnet, dass** der Rückwasserbehälter (37) ein Setzbehälter ist, in dem sich eine an Kautschuk reiche Phase (39) und eine an Kautschuk arme Phase (43) bilden.

9. Verfahren gemäß Anspruch 8, **dadurch gekennzeichnet, dass** die an Kautschuk reiche Phase (39) vor dem Einleiten in den Fällbehälter (5) mit der Fällungslösung (3) gemischt wird.

10. Verfahren gemäß Anspruch 8 oder 9, **dadurch gekennzeichnet, dass** die an Kautschuk arme Phase (43) aufkonzentriert wird und dann in den Fällbehälter (5) zurückgeführt wird.

11. Verfahren gemäß einem der Ansprüche 7 bis 10, **dadurch gekennzeichnet, dass** die im Pufferbehälter (63) gesammelte Rest-Kautschuk enthaltende Flüssigphase in den Rückwasserbehälter (37) eingeleitet wird.

12. Verfahren gemäß einem der Ansprüche 1 bis 11, **dadurch gekennzeichnet, dass** zur Rückführung der Rest-Kautschuk enthaltenden Flüssigphase (77) aus dem Pufferbehälter (63) und/oder der feinteiligen Kautschuk enthaltenden Flüssigphase und/oder der an Kautschuk reichen Phase (39) und/oder der aufkonzentrierten an Kautschuk armen Phase (47) eine als Freistrompumpe ausgeführte Kreiselpumpe oder eine Exzenterschneckenpumpe verwendet wird.

13. Verfahren gemäß Anspruch 12 **dadurch gekennzeichnet, dass** die Freistrompumpe einen Stator und/oder Rotor umfasst, der aus chlorsulfoniertem Polyethylenkautschuk gefertigt ist.

14. Verfahren gemäß einem der Ansprüche 1 bis 13, **dadurch gekennzeichnet, dass** der Kautschuk ein Butylacrylat-Pfropfkautschuk oder ein Butadien-Pfropfkautschuk ist.

15. Verfahren gemäß einem der Ansprüche 1 bis 14, **dadurch gekennzeichnet, dass** die thermoplastische Formmasse ein Butylacrylat-Styrol-Acrylnitril Copolymer, ein Acrylnitril-Butadien-Styrol Copolymer oder ein Acrylnitril-Styrol-Acrylat-Copolymer ist.

## Claims

1. Process for preparing thermoplastic molding compositions (73), comprising:
(a) feeding a rubber-containing dispersion (1) and a precipitation solution (3) into a precipitation tank (5), thereby producing an aqueous suspension (9) containing rubber particles,
(b) optionally sintering the rubber particles contained in the aqueous suspension (9) containing rubber particles into larger particles;
(c) mechanically dewatering the aqueous suspension containing rubber particles, thereby obtaining rubber particles (33) containing residual moisture and a liquid phase (35) containing finely divided rubber;
(d) feeding the rubber particles (33) containing residual moisture into an extruder (57), wherein the extruder (57) comprises a feed zone (55) into which the rubber particles (33) containing residual moisture are fed, a dewatering section (59) in which a liquid phase containing residual rubber is removed from the rubber particles containing residual moisture, at least one feed section (65) for at least one additional polymer (67) and/or additives, a mixing section (69) in which the rubber particles, the at least one additional polymer, and the additives are mixed to form a melt of the thermoplastic molding composition (73), as well as a discharge zone (71) through which a melt strand is extruded from the extruder (57),
wherein the liquid phase containing residual rubber separated in the dewatering section (59) is collected in a buffer tank (63), wherein the buffer tank (63) comprises at least one stirrer (75) with which the liquid phase containing the residual rubber is stirred to prevent the rubber particles still contained in the liquid from accumulating, and returning the liquid phase (77) containing the residual rubber collected in the buffer tank (63) to the precipitation tank (5).

2. Process according to claim 1, **characterized in that** the liquid phase containing finely divided rubber is returned to the precipitation tank (5).

3. Process according to claim 1 or 2, **characterized in that** the liquid phase containing residual rubber is mixed with water after being removed from the extruder (57).

4. Process according to claim 2 or 3, **characterized in that** the liquid phase containing finely divided rubber is fed into the buffer tank (63) before being returned to the precipitation tank (5) and is mixed with the liquid phase containing residual rubber removed in the dewatering section (59).

5. Process according to any one of claims 1 to 4, **characterized in that** the liquid phase (77) containing residual rubber returned from the buffer tank (63) to the precipitation tank (5) and/or the liquid phase containing finely divided rubber is mixed with the precipitation solution (3) prior to being introduced into the precipitation tank (5) with the precipitation solution (3).

6. Process according to any one of claims 1 to 5, **characterized in that** the buffer tank (63) has an overflow (81) through which the liquid phase containing residual rubber can be discharged from the process as wastewater.

7. Process according to claim 2, **characterized in that** the liquid phase containing finely divided rubber is collected in a return water tank (37).

8. Process according to claim 7, **characterized in that** the return water tank (37) is a settling tank in which a rubber-rich phase (39) and a rubber-poor phase (43) form.

9. Process according to claim 8, **characterized in that** the rubber-rich phase (39) is mixed with the precipitation solution (3) before being introduced into the precipitation tank (5).

10. Process according to claim 8 or 9, **characterized in that** the rubber-poor phase (43) is concentrated and then returned to the precipitation tank (5).

11. Process according to any one of claims 7 to 10, **characterized in that** the liquid phase containing residual rubber collected in the buffer tank (63) is introduced into the return water tank (37).

12. Process according to any one of claims 1 to 11, **characterized in that**, for the return of the liquid phase (77) containing residual rubber from the buffer tank (63) and/or the liquid phase containing finely divided rubber and/or the rubber-rich phase (39) and/or the concentrated rubber-poor phase (47), a centrifugal pump designed as a free-flow pump or an eccentric screw pump is used.

13. Process according to claim 12, **characterized in that** the open-circuit pump comprises a stator and/or rotor made of chlorosulfonated polyethylene rubber.

14. Process according to any one of claims 1 to 13, **characterized in that** the rubber is a butyl acrylate graft rubber or a butadiene graft rubber.

15. Process according to any one of claims 1 to 14, **characterized in that** the thermoplastic molding composition is a butyl acrylate-styrene-acrylonitrile copolymer, an acrylonitrile-butadiene-styrene copolymer, or an acrylonitrile-styrene-acrylate copolymer.

## Revendications

1. Procédé de préparation de masses de moulages thermoplastiques (73), comprenant :
(a) l'introduction d'une dispersion (1) contenant un caoutchouc ainsi que d'une solution de précipitation (3) dans un réservoir de précipitation (5), ce qui permet d'obtenir une suspension aqueuse (9) contenant des particules de caoutchouc
(b) éventuellement, le frittage des particules de caoutchouc contenues dans la suspension aqueuse (9) contenant des particules de caoutchouc pour former des particules plus grosses ;
(c) la déshydratation mécanique de la suspension aqueuse contenant des particules de caoutchouc, ce qui permet d'obtenir des particules de caoutchouc (33) contenant de l'humidité résiduelle et une phase liquide (35) contenant du caoutchouc finement divisé ;
(d) l'alimentation des particules de caoutchouc (33) contenant de l'humidité résiduelle dans une extrudeuse (57), l'extrudeuse (57) comportant une zone d'alimentation (55) dans laquelle les particules de caoutchouc (33) contenant de l'humidité résiduelle sont introduites, une section de déshydratation (59), dans laquelle une phase liquide contenant du caoutchouc résiduel est éliminée des particules de caoutchouc contenant de l'humidité résiduelle, au moins une section d'alimentation (65) pour au moins un autre polymère (67) et/ou des additifs, une section de mélange (69), dans laquelle les particules de caoutchouc, ledit au moins un autre polymère et les additifs sont mélangés pour former une masse fondue de la masse de moulage thermoplastique (73), ainsi qu'une zone de sortie (71), à travers laquelle un cordon de matière fondue est extrudé hors de l'extrudeuse (57),
la phase liquide contenant le caoutchouc résiduel séparée dans la section de déshydratation (59) étant collectée dans un réservoir tampon (63), le réservoir tampon (63) comprenant au moins un agitateur (75) avec lequel la phase liquide contenant le caoutchouc résiduel est agitée afin d'empêcher l'accumulation des particules de caoutchouc encore contenues dans le liquide, et le renvoi de la phase liquide (77) contenant le caoutchouc résiduel collectée dans le réservoir tampon (63) vers le réservoir de précipitation (5).

2. Procédé selon la revendication 1, **caractérisé en ce que** la phase liquide contenant du caoutchouc finement divisé est renvoyée dans le réservoir de précipitation (5).

3. Procédé selon la revendication 1 ou 2, **caractérisé en ce que** la phase liquide contenant le caoutchouc résiduel est mélangée à de l'eau après avoir été retirée de l'extrudeuse (57).

4. Procédé selon la revendication 2 ou 3, **caractérisé en ce que** la phase liquide contenant du caoutchouc finement divisé est introduite dans le réservoir tampon (63) avant d'être renvoyée dans le réservoir de précipitation (5) et est mélangée à la phase liquide contenant le caoutchouc résiduel éliminé dans la section de déshydratation (59).

5. Procédé selon l'une des revendications 1 à 4, **caractérisé en ce que** la phase liquide (77) contenant le caoutchouc résiduel, renvoyée du réservoir tampon (63) vers le réservoir de précipitation (5), et/ou la phase liquide contenant du caoutchouc finement divisé, est mélangée à la solution de précipitation (3) avant d'être introduite dans le réservoir de précipitation (5) avec la solution de précipitation (3).

6. Procédé selon l'une des revendications 1 à 5, **caractérisé en ce que** le réservoir tampon (63) comporte un trop-plein (81) par lequel la phase liquide contenant le caoutchouc résiduel peut être évacuée du processus en tant qu'eaux usées.

7. Procédé selon la revendication 2, **caractérisé en ce que** la phase liquide contenant du caoutchouc finement divisé est collectée dans un réservoir de retour (37).

8. Procédé selon la revendication 7, **caractérisé en ce que** le réservoir de retour (37) est un décanteur dans lequel se forment une phase riche en caoutchouc (39) et une phase pauvre en caoutchouc (43).

9. Procédé selon la revendication 8, **caractérisé en ce que** la phase riche en caoutchouc (39) est mélangée à la solution de précipitation (3) avant d'être introduite dans le réservoir de précipitation (5).

10. Procédé selon la revendication 8 ou 9, **caractérisé en ce que** la phase pauvre en caoutchouc (43) est concentrée et puis renvoyée dans le réservoir de précipitation (5).

11. Procédé selon l'une des revendications 7 à 10, **caractérisé en ce que** la phase liquide contenant le caoutchouc résiduel collectée dans le réservoir tampon (63) est introduite dans le réservoir de retour (37).

12. Procédé selon l'une des revendications 1 à 11, **caractérisé en ce que**, pour le recyclage de la phase liquide (77) contenant le caoutchouc résiduel à partir du réservoir tampon (63) et/ou de la phase liquide contenant du caoutchouc finement divisé et/ou de la phase riche en caoutchouc (39) et/ou de la phase concentrée pauvre en caoutchouc (47), une pompe centrifuge conçue en tant que pompe à flux libre ou une pompe à vis excentrique est utilisée.

13. Procédé selon la revendication 12, **caractérisé en ce que** la pompe à flux libre comprend un stator et/ou un rotor fabriqué en caoutchouc de polyéthylène chlorosulfoné

14. Procédé selon l'une des revendications 1 à 13, **caractérisé en ce que** le caoutchouc est un caoutchouc greffé à l'acrylate de butyle ou un caoutchouc greffé au butadiène.

15. Procédé selon l'une des revendications 1 à 14, **caractérisé en ce que** la masse de moulage thermoplastique est un copolymère d'acrylate de butyle-styrène-acrylonitrile, un copolymère d'acrylonitrile-butadiène-styrène ou un copolymère d'acrylonitrile-styrène-acrylate.
